# EUROPEAN PATENT SPECIFICATION

(11) **EP 1 844 082 B1**
(45) Date of publication and mention of the grant of the patent: **11.03.2015**
(21) Application number: 06715770.1
(22) Date of filing: 27.01.2006
(51) Int. Cl.: C08F 4/6592, C08F 210/16

(54) **METHOD OF PREPARING A MIXED SUPPORTED METALLOCENE CATALYST**
VERFAHREN ZUR HERSTELLUNG VON EINEM GETRÄGERTEN GEMISCHT METALLOCEN-KATALYSATOR
PROCÉDÉ DE PRÉPARATION D'UN CATALYSEUR MÉTALLOCÈNE MIXTE SUR SUPPORT

(30) Priority: 31.01.2005 KR 20050008761
(43) Date of publication of application: 17.10.2007
(73) Proprietor: LG Chem, Ltd., Youngdungpo-gu, Seoul 150-721 (KR)
(72) Inventor: CHOI, Yiyoung, Daegu-city 706-909 (KR); LEE, Ki-Soo, Daejeon-city 302-782 (KR); LEE, Sangwoo, Daejeon-city 305-761 (KR); CHAE, Hoon, 117-617 Hakyeoul Cheonggu Apt., Seoul 139-734 (KR); PARK, Churlyoung,8-505 Lg Company Housing Apt., Daejeon-city 305-340 (KR); LEE, Choong-Hoon, Daejeon-city 305-340 (KR); LEE, Soojeong, 109-1201 Lucky Hana Apt., Daejeon-city 305-721 (KR)
(74) Representative: Goddar, Heinz J.
(86) International application number: PCT/KR2006/000317
(87) International publication number: WO 2006/080817

(56) References cited:
- WO-A1-98/22486
- WO-A1-2004/087770
- WO-A1-2006/001588
- US-B1- 6 444 833

## Description

### Technical Field

The present invention relates a method of preparing a mixed supported metallocene catalyst.

### Background Art

Olefin polymerization catalyst systems are categorized into Ziegler Natta catalyst systems and metallocene catalyst systems. Researchers have developed these high activity catalyst systems according to their characteristics. Ziegler Natta catalyst systems were discovered in the 1950s and are used in a wide range of commercial processes. However, since Ziegler Natta catalyst systems are multi site catalysts having many active species, a polymer, that is, polyolefin or alpha olefin copolymer developed therewith, has a wide molecular weight distribution. In addition, the composition distribution of a comonomer, that is, alpha olefin, such as butene, hexene, octane, developed with the Ziegler Natta catalyst is non-uniform, and in particular, more comonomers exist in low molecular weight polymer part than in high molecular weight polymer part. As a result, it is difficult to obtain a polymer with desired properties.

Metallocene catalyst systems, discovered in 1980 by Kaminsky, et al., include a combination of a main catalyst that is formed mainly of a transition metal compound and an additive catalyst that is an organometallic compound mainly formed of aluminum. Metallocene catalyst systems are homogeneous complex catalysts and single-site catalysts. Accordingly, a polymer produced with a metallocene catalyst system has a narrow molecular weight distribution in which more comonomers exist in a high molecular weight polymer part. In addition, polymers with various stereoregularities, copolymerization characteristics, molecular weights, and degrees of crystallinity can be obtained by modifying the structure of a ligand of the catalyst and adjusting polymerization conditions.

However, a polyethylene that is prepared through polymerization using a metallocene catalyst has poor processability due to its narrow molecular weight distribution. For example, when such a polyethylene is used to form a pipe, productivity decreases substantially due to an extrusion load. In addition, since the polyethylene prepared with the metallocene catalyst system has small high molecular weight polymer part, it is not suitable for applications requiring high pressure resistance and excellent environmental stress cracking resistance (ESCR), for example, a water supply pipe.

The molecular weight distribution of polyolefin plays an important role in determining physical properties of the polymer, in particular, fluidity and mechanical properties affecting the processability of the polymer. In addition, in order to facilitate various polyolefin applications, it is important to improve solubility processability by controlling a molecular weight distribution. For example, a polymer having a bimodal or wide molecular weight distribution has been developed to obtain the mechanical properties of a high molecular weight resin and the processability of a low molecular weight resin.

German Patent No. 28,856,548 teaches a method of preparing a polymer having a bimodal or wide molecular weight distribution using a conventional olefin polymerization catalyst in two or more multi reactors. In this case, polymers produced in respective reactors have different molecular weights. However, this method is complex and a reaction between the catalyst and hydrogen is limited. As a result, the molecular weight distribution is limited. In addition, conditions for polymerization are difficult to obtain.

US Patent NO. 4,461,873 teaches a method of producing polyolefins having various molecular weights through post reacting or through molten blending two kinds of polyethylenes having different molecular weights and different degrees of copolymerization. However, such physical blending results in additional high production costs, and such a polyolefin has undesired properties because the mixed polymers contain an excessive amount of gel, added to attain compatibility.

In another method of producing polyolefin having various molecular weights, two different catalysts can be blended in a single reactor to perform polymerisation. Alternatively, two or more catalysts supported by a single support can be used to perform polymerization. A catalyst mixture including a metallocene compound and a Ziegler Natta-based titanium metal compound supported by a single support are used in many patents and references, including US Patent Nos. 6,444,605 B1; 6,399,531 B1; 6,417,129 B2; 6,399,723 B1; and 5,614,456, and Korean Laid-open Patent Publication Nos. 1988-045993; 1998-045994; 1999-022334; and 2000-0042620.

In addition, a polyolefin having desired molecular weight distribution, stereoregularity, and copolymerization characteristics can be produced using a mixture of metallocene catalysts having specific characteristics. For example, by using metallocene catalyst systems having different growth speeds and different termination rate constants, a polyolefin having a bimodal or wide molecular weight distribution can be produced (see J. A. Ewen, Stud., Surf. Sci. & Catal. vol. 1986 25, and US Patent No. 6,384,161 B1) In addition, Kaminsky et al. has reported that, as a result of ethylene polymerisation in the presence of two kinds of homogenous metallocene catalysts including a Cp₂ZrCl₂-Cp₂HfCl₂-MAO catalyst system, the molecular weight distribution (Mw/Mn) was in the range of 4.1 to 10.0, wider than a range of 1.9 to 2.3 obtained when a homogeneous catalyst system was used (A. Ahlers, W. Kaminsky, Makromol. Chem., Rapid Commun., 9, 1988, 457.)

However, the references and patents referred above teach only polymerisation using a mixture of two kinds of catalysts. More particularly, only the selecting of an organic metal compound to control a molecular weight distribution and properties of a polymer and a homogenous catalyst system are described, and the production of a supported catalyst suitable for vapor (gas phase) and slurry processes has not been disclosed.

WO 2004/087770 A1 and WO 2006/001588 A1 disclose supported metallocene catalysts supported on silica and activated by methylaluminoxane, preparation of such mixed catalyst systems as well as methods for polymerizing olefins.

### Disclosure of Invention

### Technical Solution

The present invention provides a method of preparing the mixed supported metallocene catalyst.

According to the present invention, there is provided a method of preparing a mixed supported metallocene catalyst, the method including:
reacting an additive catalyst having a Group 13 metal compound with a support having a hydroxy group on a surface thereof to produce a supported additive catalyst;
impregnating the supported additive catalyst with a metallocene compound of formula 1 to produce a first supported metallocene catalyst;
impregnating the supported additive catalyst with a metallocene compound of formula 2 or formula 3 to produce a second supported metallocene catalyst; and
blending the first supported metallocene catalyst and the second supported metallocene catalyst:

   (CₚR¹ₐR^{m}_{b})(C_{p'}R²_{a'}Rⁿ_{b'})_{z}MQₖ (1)

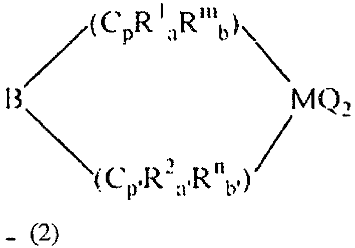

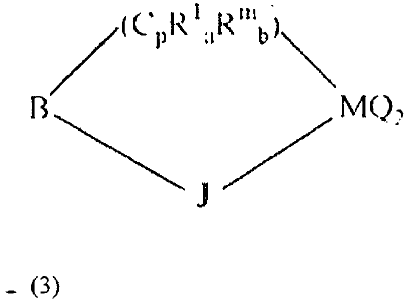

   where Cₚ and Cₚ are each independently a group selected from the group consisting of a cyclopentadienyl group, an indenyl group, a 4,5,6,7-tetrahydro-1-indenyl group, and a fluorenyl group;
   R^{m} and Rⁿ are each independently a hydrogen radical, a C1-C20 alkyl group, a C5-C12 cycloalkyl group, a C6-C18 aryl group, a C2-C 14 alkenyl group, a C6-C 18 alkylaryl group, a C6-C18 arylalkyl group, a C6-C20 arylalkenyl group, or a C1-C20 alkylsilyl group;
   R¹ and R² are each independently hydrogen or a C1 to C6 hydrocarbyl group;
   a, a, b, and b are each an integer of 1 through 4;
   M is a transition metal selected from the group consisting of a Group 4B transition metal, a Group 5B transition metal, and a Group 6B transition metal;
   Q is a halogen group, a C1-C20 alkyl group, a C2-C16 alkenyl group, a C6-C20 aryl group, a C6-C20 alkylaryl group, a C6-C20 arylalkyl group, or a C6-C20 alkylidene group,
   k is 2 or 3;
   z is 0 or 1, wherein when k is 3, z is 0;
   B is a material selected from the group consisting of a C1-C4 alkyl group and a C1-C10 hydrocarbonyl group having one of silicon, germanium, phosphorous, nitrogen, boron, and aluminum;
   J is one material selected from the group consisting of NR^{s}, O, PR^{s}, and S where R^{s} is one of a C1-C20 alkyl group and a substituted alkyl group;
   at least one hydrogen radical of R^{m}, Rⁿ, B, or R^{s} is a compound represented by formula 4, a compound represented by formula 5, or a compound represented by formula 6: 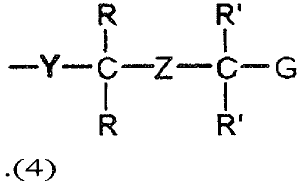
   where Y is a chemical bond or an oxygen atom;
   Z is an oxygen atom or a sulfuric atom;
   R and R' are each independently a hydrogen radical, a C1-C20 alkyl group, a cycloalkyl group, a C6-C20 aryl group, a C2-C12 alkenyl group, a C6-C20 alkylaryl group, a C6-C20 arylalkyl group, or a C6-C20 arylalkenyl group, wherein one of R's can be connected to the other R' to form a ring;
   G is a C1-C20 alkoxy group, a C6-C20 aryloxy group, a C1-C20 alkylthio group, a C6-C20 arylthio group, a phenyl group, or a substituted phenyl group and can be connected to R' to form a ring;
   when Z is a sulfuric atom, G is one of a C1-C20 alkoxy group and a C6-C20 aryloxy group, and when G is a C1-C20 alkylthio group, a C6-C20 arylthio group, a phenyl group, or a substituted phenyl group, Z is an oxygen atom; 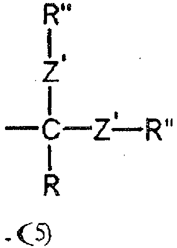
   where Z' is one of an oxygen atom and a sulfuric atom and at least one of the two Z's is an oxygen atom; and
   R and R" are each independently a hydrogen radical, a C1-C20 alkyl group, a C5-C20 cycloalkyl group, a C6-C20 aryl group, a C2-C12 alkenyl group, a C6-C20 alkylaryl group, a C6-C20 arylalkyl group, or a C6-C20 arylalkenyl group, wherein one of the R"s is connected to the R or the other R " to form a ring; and 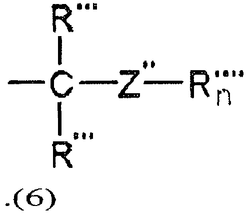
   where Z" is an oxygen atom, a sulfur atom, a nitrogen atom, a phosphorous atom, or an arsenic atom;
   R"'s' are each independently a hydrogen radical, a C1-C40 alkyl group, a C5-C40 cycloalkyl group, a C6-C20 aryl group, a C2-C12 alkenyl group, a C6-C20 alkylaryl group, a C6-C20 arylalkyl group, or a C6-C20 arylalkenyl group;
   R"" is a hydrogen radical, a C1-C40 alkyl group, a C6-C20 aryl group, a C2-C20 alkenyl group, a C6-C20 alkylaryl group, a C1-C20 alkylsilyl group, a C6-C20 arylsilyl group, a phenyl group, or a C6-C20 substituted phenyl group; and
   n is 1 or 2, wherein when Z" is an oxygen atom or a sulfuric atom, n is 1, and when Z" is a nitrogen atom, a phosphorous atom, or an arsenic atom, n is 2.

### Advantageous Effects

Polyolefin having desired properties can be produced using a mixed supported metallocene catalyst by controlling a molecular weight distribution according to a mixture ratio of the mixed supported metallocene catalyst. The mixed supported metallocene catalyst can be used in a wide range of applications, such as rotational molding products, injection forming products, films, containers, pipes, or fibers. In particular, the high molecular weight component of the polymer produced using the mixed supported metallocene catalyst has substantially more of a comonomer than a polymer prepared using a conventional Ziegler-Natta catalyst so that a pipe having high temperature resistance and pressure resistance can be provided.

### Description of Drawings

The above and other features and advantages of the present invention will become more apparent by describing in detail exemplary embodiments thereof with reference to the attached drawings in which:
FIG 1 is a schematic view illustrating a method of producing polyolefin; and
FIG 2 is a schematic view illustrating a method of producing polyolefin

### Mode for Invention

Hereinafter, the present invention will be described in detail by explaining embodiments of the invention with reference to the attached drawings.

A mixed supported metallocene catalyst prepared by the inventive method is used to produce a polyolefin having desired properties by controlling a molecular weight distribution using two or more catalyst sites, that is, using two or more catalysts respectively used to produce a high molecular weight polyolefin and a low molecular weight polyolefin in a single polymerisation reactor. The mixed supported metallocene catalyst can noticeably increase the amount of a comonomer contained in a high molecular weight polyolefin relative to the amount of a comonomer contained in a conventional Ziegler-Natta catalyst, and controls the structure of the polyolefin to be produced without causing a structural change of a metallocene compound.

More particularly, a support with an additive catalyst(metallocene) is impregnated with a first metallocene compound inducing the formation of a low molecular weight polyolefin and another support with an additive catalyst is impregnated with a second metallocene compound inducing formation of a high molecular weight polyolefin. Then, various amounts of the supported first metallocene compound and the supported second metallocene compound are mixed to produce the mixed supported metallocene catalyst. Then, the mixed supported metallocene catalyst is provided to a single polymerisation reactor at a controlled supply rate. As a result, a polymer having desired properties and a desired molecular weight distribution can be provided.

M in formulae 1 through 3 may be titanium, zirconium, or hafnium; and Q is a halogen, for example, chloride.

The metallocene compound of formula 1 may be [A-O-(CH₂ₐ-C₅H₄]₂ZrCl₂ or [A-O-(CH₂)ₐ-C₉H₆]ZrCl₃ where *a* is an integer of 4 to 8, and A can be a material selected from methoxymethyl, t-butoxymethyl, tetrahydropyranyl, tetrahydrofuranyl, 1-ethoxyethyl, 1-methyl-1-methoxyethyl, and t-butyl (see Lee, B. Y., Oh, J. S., Organomet. Chem., 552,1998,313)

In the compound of formula 2, B acts as a structural bridge between two Cₚ rings to provide stereographical strength to the Cₚ rings. The Cₚ rings of the metallocene catalyst are substituted with stereographically different substituents such that the Cₚ rings are stereographically different from each other. In this case, R¹ₐR^{m}_{b} is selected such that (CₚR¹ₐR^{m}_{b}) is stereographically different from (CₚR²ₐR^{a}_{b})

The metallocene compound of formula 2 may be [A-O-(CH₂)ₐ-C₅H₄C(CH₃)₂[C₁₃H ₈]ZrCl₂, [A-O-(CH)₂)ₐ-C₅H₄]Si(CH₃)₂[C₁₃H₈]ZrCl₂, [C₅H₅]C(CH₃)(A-O-(CH₂)ₐ)[C₁₃H₈] ZrCl₂, or [C₅H₅]Si(CH₃)(A-O-(CH₂)ₐ)[C₁₃H]ZrCl₂, where a is an integer of 4 to 8 and A can be one material selected from methoxymethyl, t-butoxymethyl, tetrahydropyranyl, tetrahydrofuranyl, 1-ethoxyethyl, 1-methyl-1-methoxyethyl, and t-butyl.

The metallocene compound of formula 3 may be [(A-D-(CH₂)ₐ)](CH₃)X(C₅Me₄ )(NCMe₃)]TiCl₂ or [(A-D-(CH₂)ₐ)](CH₃)X(C₅Me₄)(NCMe₃)]ZrCl₂ where each of A and A is a material selected from hydrogen, a C1-C20 alkyl group, a C2-C20 alkenyl group, a C6-C20 aryl group, a C6-C20 alkylaryl group, a C6-C20 arylalkyl group, a C1-C20 alkylsilyl group, a C6-C20 arylsilyl group, methoxymethyl, t-butoxymethyl, tetrahydropyranyl, tetrahydrofuranyl, 1-ethoxyethyl, 1-methyl-1-methoxyethyl, and t-butyl; D is an oxygen atom or a nitrogen atom; a is an integer of 4 to 8; X is methylene, ethylene, or silicon; and Me denotes CH₃.

A support according to an embodiment of the present invention has highly reactive hydroxy and siloxane groups after the support is dried to remove water disposed on the surface of the support. More particularly, the support may be silica, silica-alumina, or silica-magnesia dried at a high temperature. The support may include an oxide, such as Na₂ O, K₂ CO₃, BaSO₄, or Mg(NO₃)₂; a carbonate; a sulfate; or a nitrate. In this case, the drying temperature may be in the range of 200-800 °C, preferably, 300-600 °C , and more preferably, 300-400 °C . When the drying temperature is less than 200 °C , the amount of the hydroxy group on the surface of the support is so great that the water reacts with an additive catalyst. On the other hand, when the drying temperature is greater than 800 °C, the amount of the hydroxy group decreases substantially and only the siloxane group remains on the surface of the support such that the nunber of reaction sites for the additive catalyst decreases.

The amount of the hydroxy group on the surface of the support may be in the range of 0.1 to 10 mmol/g, for example, 0.5 to 1 nmol/g. The amount of the hydroxy group existing on the surface of the support can be adjusted by using appropriate manufacturing processes for the support and by controlling manufacturing conditions or drying conditions including temperature, time, vacuum conditions, and spray drying conditions. When the amount of the hydroxy group is less than 0.1 mmol/g, the nunber of reaction sites where the hydroxy group reacts with the additive catalyst decreases. On the other hand, when the amount of the hydroxy group is greater than 10 mmol/g, in addition to the hydroxyl group, a hydroxyl group of water may exist on the surface of the silica forming the support.

The dried support is mixed with additive catalysts of formulae 7 through 9 to produce an additive catalyst supported by a support. The additive catalyst, which is an organometallic compound including a Group 13 metal, is the same as an additive catalyst used to polymerize olefin in the presence of a metallocene catalyst. When the support is impregnated with the additive catalyst, a hydroxy group of the support is bonded with the Group 13 metal:

-[Al(R⁶)-O]ₙ - (7)

where each R⁶ is independently a halogen radical, a C1-C20 hydrocarbyl group, or a C1-C20 hydrocarbyl group substituted with a halogen; and
*n* is an integer of 2 or greater;

N(R⁷)₃₋ (8)

where N is aluminum or boron;
each R⁷ is independently a halogen radical, a C1-C20 hydrocarbyl group, or a C1-C20 hydrocarbyl group substituted with a halogen; and

[L-H]⁺[NE₄]⁻ or [L]⁺[NE₄]⁻ (9)

where L is a neutral or cationic Lewis acid,
H is a hydrogen atom,
N is a Group 13 atom, and
each E is independently a C6-C40 aryl group substituted with at least one of a halogen radical, a C1-C20 hydrocarbonyl group, a C1-C20 alkoxy group, a C6-C20 phenoxy group, and a C6-C20 hydrocarbonyl group having a nitrogen atom, a phosphorous atom, a sulfur atom, and an oxygen atom.

The compound of formula 7 is methylaluninoxane (MAO), ethylaluminoxane, isobutylaluminoxane, or butylaluminoxane.

The compound of formula 8 is trimethylaluninum, triethylaluminum, triisobutylaluninum, tripropylaluminum, tributylaluminum, dimethylchloroalminum, dimethylisobutylaluminum, dimethylethylaluminum, diethylchloroaluminum, triisopropylaluminum, tri-s-butylaluminum, tricyclopentylaluminum, tripentylaluminum, triisopentylaluminum, trihexylaluminum ethyldimethylaluminum, methyldiethylaluminum, triphenylaluminum, tri-p-tollylaluminum, dimethylaluminummethoxide, dimethylaluminumethoxide, trimethylboron, triethylboron, triisobutylboron, tripropylboron, or tributylboron.

The compound of formula 9 is triethylammoniumtetraphenylboron, tributylammoniumtetraphenylboron, trimethylammoniumtetraphenylboron, tripropylammoniumtetraphenylboron, trimethylammoniumtetra(p-tolyl)boron, tripropylammoniumtetra(p-tolyl)boron, triethylammoniumtetra(o,p-dimethylphenyl)boron, trimethylammononiumtetra(o,p-dimethylphenyl)boron, tributylamm oniumtetra(p-trifluoromethylphenyl)boron, trimethylammoniumtetra(p-trifluoromethylphenyl)boron, tributylammoniumtetrapentafluorophenylboron, N,N-diethylaniliniumtetraphenylboron, N,N-diethylaniliniumtetraphenylboron, N,N-diethylaniliniumtetrapentafluorophenylboron, diethylmmoniumtetrapentafluorophenylboron, triphenylphosphoniumtetraphenylboron, trimethylphosphoniuntetraphenylboron, triethylammoniumtetraphenylaluminum, tributylammoniumtetraphenylaluminum, trimethylammniumtetraphenylaluminum, tripropylammoniumtetraphenylaluminum, trimethylammoniumtetra(p-tolyl)aluminum, tripropylammoniumtetra(p-tolyl)aluminum, triethylammoniumtetra(o,p-dimethylphenyl)aluminum, tribulylammoniumtetra(p-trifluoromethylphenyl)aluminum, trimethylammoniumtetra(p-trifluoromethylphenyl)aluminum, tributylammoniumtetrapentafluorophenylaluminum, N,N-diethylaniliniumtetraphenylaluminum, N,N-diethylaniliniumtetraphenylaluminum, N,N-diethylaniliniumtetrapentafluorophenylaluminum diethylammoniumtetrapentafluorophenylaluminum, triphenylphosphoniumtetraphenylaluminum, trimethylphosphoniumtetraphenylaluminum, triethylammoniumtetraphenylboron, tributylmmoniumtetraphenylboron, trimethylammoniuntetraphenylboron, tripropylammoniumtetraphenylboron, trimethylammoniumtetra(p-tolyl)boron, tripropylammoniumtetra(p-tolyl)boron, triethylammoniumtetra(o,p-dimethylphenyl)boron, trimethylammoniumtetra(o,p-dimethylphenyl)boron, tributylammoniumtetra(p-trifluoromethylphenyl)boron, trimethylammoniumtetra(p-trifluoromethylphenyl)boron, tributylammoniumtetrapentafluorophenylboron, N,N-diethylaniliniumtetraphenylboron, N,N-diethylaniliniumtetraphenylboron, N,N-diethylaniliniumtetrapentafluorophenylboron, diethylammoniumtetrapentafluorophenylboron, triphenylphosphoniumtetraphenylboron, triphenylcarboniumtetraphenylboron, triphenylcarboniumtetraphenylaluminum, triphenylcarboniumtetra(p-trifluoromethylphenyl)boron, or triphenylcarboniumtetrapentafluorophenylboron.

In the mixed supported metallocene catalyst, the mole ratio of a Group 13 metal to a Group 4 may be in the range of 1-10,000, preferably, 1-1,000, and more preferably, 10-100. When the mole ratio is less than 1, the amount of A1 is too small and a catalyst active species is not produced such that the activity of the mixed supported metallocene catalyst is very low. When the mole ratio is greater than 10,000, MAO can act as a catalyst poison.

In the mixed supported metallocene catalyst, a first supported metallocene catalyst is used to produce polyolefin having a low molecular weight of 1,000-200,000, and a second supported metallocene catalyst is used to produce polyolefin having a high molecular weight of 210,000-1,000,000 such that polyethylene having a bimodal or wide molecular weight distribution can be produced. The supported metallocene catalyst inducing a high molecular weight polyolefin is very effective for the poly- merization of alpha-olefin such that ethylene-based copolymerization in which an alpha-olefin comonomer is mainly bonded with a high molecular weight chain can be produced.

The weight ratio of the first supported metallocene catalyst to the second supported metallocene catalyst of the mixed supported metallocene catalyst may be in the range of 0.01-1000, preferably, 0.1-100, and more preferably, 0.2-10. When the weight ratio of the first supported metallocene catalyst to the second supported metallocene catalyst is less than 0.01, the mixed supported metallocene catalyst exhibits only the characteristics of the second supported metallocene catalyst. On the other hand, the ratio of the first supported metallocene catalyst to the second supported metallocene catalyst is greater than 1000, the mixed supported metallocene catalyst exhibits only the characteristics of the first supported metallocene catalyst.

A method of producing a mixed supported metallocene catalyst used to produce polyolefin according to an embodiment of the present invention includes: reacting an additive catalyst having a Group 13 metal compound with a support having a hydroxy group on a surface thereof to produce a supported additive catalyst; impregnating the supported additive catalyst with a metallocene compound of formula 1 to produce a first supported metallocene catalyst; impregnating the supported additive catalyst with a metallocene compound of formula 2 or formula 3 to produce a second supported metallocene catalyst; and blending the first supported metallocene catalyst and the second supported metallocene catalyst.

According to an embodiment of the present invention, a support having a hydroxy group on its surface is reacted with an organometallic conpound having a Group 13 metal compound as an additive catalyst, and then a metallocene compound in which an alkoxy group which is an oxygen (O) donor and acts as a lewis base is substituted with cyclopentadiene, a cyclopentadiene derivative, or a bridge group, is reacted with the supported additive catalyst to produce a mixed supported metallocene catalyst. The synthesis of the supported metallocene catalyst is shown in Reaction Scheme 1. Referring to Reaction Scheme 1, the supported metallocene catalyst having a functional group may gain metallocenes through a lewis acid-base interaction between the functional group of the metallocene and aluminum. The supported metallocene catalyst has a stronger bond with the support than a metallocene catalyst that does not have a functional group, since only an ionic bond is formed between such a metallocene catalyst and the support. Therefore, when olefin is polymerized, the supported catalyst is not separated from the support, thus preventing fouling in the reactor.

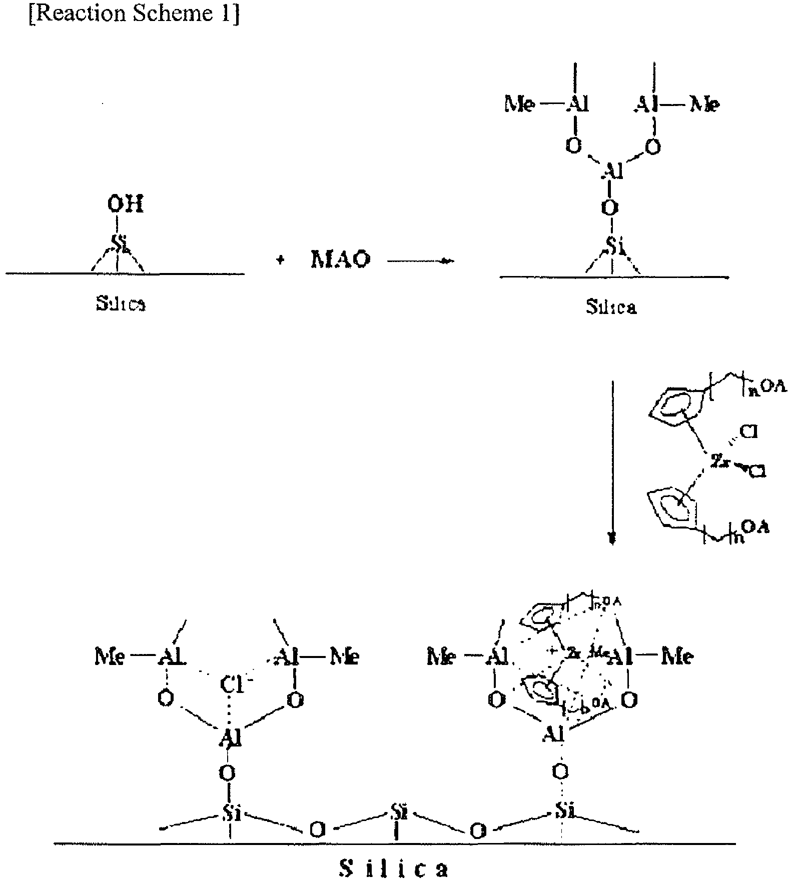

When the support is reacted with the additive catalyst, the reaction can be performed with or without a solvent. The solvent may be an aliphatic hydrocarbon, such as hexane or pentane, or an aromatic hydrocarbon, such as toluene.

The reaction temperature may be in the range of -20 °C to 100 °C, preferably, -10 °C to 60 °C, and more preferably, 0 °C to 40 °C. When the reaction temperature is too high, MAO decomposes, and catalyst stability and polymerisation activity decrease. When the reaction temperature is too low, the amount of unreacted reaction material increases and thus the amounts of Al and Zr contained in the final catalyst decrease. Accordingly, the reaction can be optimised within the temperature range described above. The reaction time may be in the range of 10 minutes to 24 hours.

Before using the supported additive catalyst prepared as described above, the reaction solvent may be removed through filtration or reduced pressure distillation. Alternatively, when needed, the supported additive catalyst can be soxhlet filtered using an aromatic hydrocarbon, such as toluene.

A suitable solvent for reacting the supported additive catalyst with the metallocene compounds may be an aliphatic hydrocarbon, such as hexane or pentane; an aromatic hydrocarbon, such as toluene or benzene; a hydrocarbon substituted with dichloromethane; an ether, such as diethylether or THF; aceton; or ethylacetate.

At this time, the reaction temperature may be in the range of 0 °C to 100 °C, and the reaction time may be 5 minutes to 24 hours.

Before using the supported metallocene catalyst, the reaction solvent may be removed through filtration or reduced pressure distillation. Alternatively, when needed, the supported metallocene catalyst can be soxhlet filtered using an aromatic hydrocarbon, such as toluene.

The mixed supported metallocene catalyst prepared according to an embodiment of the present invention can be directly used to produce an olefin polymer. Alternatively, the mixed supported metallocene catalyst may contact an olefin-based monomer, such as ethylene, propylene, 1-butene, 1-hexene, or 1-octene, to produce a preliminarily polymerized catalyst.

The polymerization process using the mixed supported metallocene catalyst can be a solution process, a slurry process, a vapor phase process, or a combination of a slurry process and a vapor phase process, preferably, a slurry process or a vapor phase process, and more preferably, a single reactor type slurry or vapor process.

The mixed supported metallocene catalyst may be diluted in a slurry using a C5-C12 aliphatic hydrocarbon solvent suitable for olefin polymerization before being injected into the reactor. The C5-C12 aliphatic hydrocarbon solvent may be pentane, hexane, heptane, nonane, decan, or an isomer thereof; an aromatic hydrocarbon, such as toluene or benzene; a hydrocarbon substituted with a chloride atom, such as dichlorometane or chlorobenzene. In this case, the solvent may be treated using a small amount of aluminum to remove water and air, which acts as a catalyst poison.

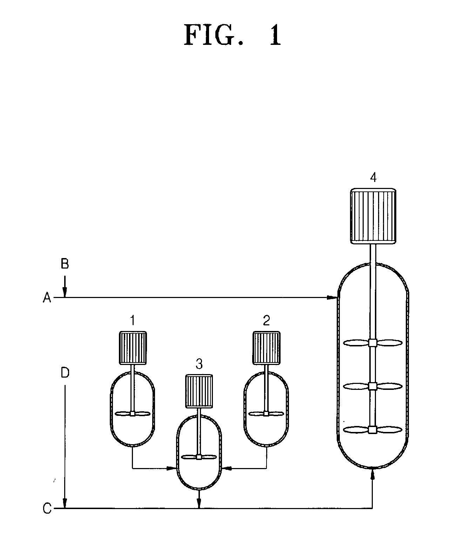

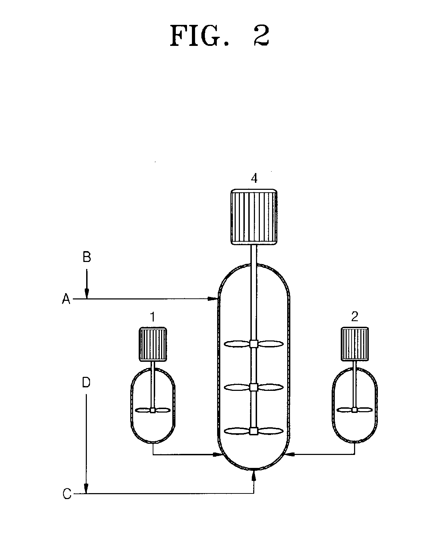

A method of providing the mixed supported metallocene catalyst and a source for olefin polymerization is illustrated in FIGS. 1 and 2.

Referring to FIG 1, gaseous ethylene A and hydrogen B are added to a polymerization reactor. Then, triethylaluminum D contained in hexane C reacts with a mixed supported metallocene catalyst prepared in an agitating reactor 3 by mixing a first supported metallocene catalyst slurry that has been prepared in an agitating tank 1 and a second supported metallocene catalyst slurry that has been prepared in an agitating tank 2. Next, the reactant product is transferred to the polymerization reactor containing the gaseous ethylene A and hydrogen B. In this case, hydrogen acts as a chain transfer agent to control the molecular weight of a polymer that will be formed, and the triethylaluminum acts as a scavenger of water. The addition of the triethylaluminum D is optional.

Referring to FIG 2, the first supported metallocene catalyst and the second supported metallocene catalyst are respectively prepared in slurry tanks I and 2, and then loaded into the polymerization reactor 4 through respective inlets.

An olefin-based monomer that can be polymerized using the mixed supported matallocene catalyst may be ethylene, propylene, alpha-olefin, or cyclic olefin. In addition, the olefin- based monomer can be a diene olefin-based monomer, or a triene olefin-based monomer and has at least two double bonds. Examples of such a monomer include ethylene , propylene, 1-butene, 1-pentene, 4-methyl-1-pentene, 1-hexene, 1-heptene, 1-decene, 1-undecene, 1-dodecene, 1-tetradecene, 1-hexadecene, 1-icocene, nobonene, nobonadiene, ethylidenenobonene, vinylnobonene, dicyclopentadiene, 1,4-butadiene, 1,5-pentadiene, 1,6-hexadiene, styrene, alpha-methylstyrene, divinylbenzene, and 3-chloromethylstyrene. In addition, at least two of the above monomers can be copolymerized.

These polymers can be polymerized at a polymerization temperature of 25-500 °C, preferably, 25-200 °C, and more preferably, 50-150 °C, in the presence of the mixed supported metallocene catalyst.

The polymerization pressure may be in the range of 1-100 Kgf/cm², preferably, 1- 70 Kgf/cm², and more preferably, 5- 50 Kgf/cm². When the polymerization temperature and polymerization pressure are outside these ranges, the reactivity and yield decrease, or a desired property of the polymer cannot be obtained because it is difficult to control a molecular weight due to a quick reaction.

The polyolefin polymer may have a bimodal or multi-modal molecular weight distribution including low and high molecular weights. For example, the molecular distribution may be in the range of 5-30. Due to such a wide (broad) molecular weight distribution, the polyolefin can be easily molded into desired products. In addition, since alpha-olefin copolymer mainly exists in a high molecular weight ethylene chain, the polyethylene has excellent pressure resistance and environmental stress cracking resistance.

The amount of ethylene in the polyolefin polymer may be in the range of 55-99% by weight, preferably, 65-98% by weight, and more preferably, 70-96% by weight. A composing unit induced from a C3-C20 alpha-olefinC4-C12 may be in the range of 1-45% by weight, preferably, 2-35% by weight, and more preferably, 4-20% by weight. The amount of the weight average molecular weight (Mw) of low molecular weight polyolefin may be in the range of 1,000 to 200,000, and the amount of the high molecular weight polyolefin may be in the range of 210,000 to 1,000,000, which are produced using the two catalysts.

The density of the ethylene-based copolymer is dependent upon the amount of the alpha-olefm copolymer used. That is, as the amount of the alpha-olefin copolymer used increases, the density of the ethylene-based copolymer decreases. On the other hand, as the amount of the alpha- olefin copolymer used decreases, the density of the ethylene-based copolymer increases. The density of a resin may be in the range of 0.920 to 0.960 g/cm³, for example, 0.925 to 0.952 g/cm³, to obtain optimal pressure resistance and environmental stress cracking resistance.

The melt index of the polyolefin may be in the range of 0.1-10 g/10 minutes, for example, 0.2-3 g/10 minutes. When the melt index is inside this range, a sagging phenomenon can be prevented during a molding process and low product moldability due to low flowability can be prevented.

The polyolefin copolymer described above has various properties and a bimodal or wide molecular weight distribution. Also, the polyolefin has a wide range of applications, such as rotational molding products, injection forming products, films, containers, pipes, or fibers. More particularly, since the polyolefin has excellent moldabiltiy, pressure resistance, and environmental stress cracking resistance (ESCR), it can be molded into a pipe without crosslinking. That is, the polyolefin copolymer can be directly used as a source, and thus a blending process with a crosslinking agent is not required, and a conventional extruder can be used without modification, and thus, additional power consumption is not required. As a result, manufacturing costs are low.

The polyethylene prepared has excellent toughness, environmental stress cracking resistance (ESCR), and pressure resistance because a great amount of a comonomer exists in a high molecular weight part of the polyethylene. As a result, the polyethylene can be used to form a pipe that is not crosslinked. Conventionally, the formation of a pipe using a typical polyethylene is accompanied by an offensive odor resulting from the residue of an unreacted crosslinking agent when ethylene(based polyethylene) is crosslinked. However, the polyethylene can be used without crosslinking, and thus an offensive odor is not generated. Due to such excellent sanitation, the polyethylene can be used to form a water supply pipe.

The present invention will be described in further detail with reference to the following examples. These examples are for illustrative purposes only.

Organic reagents and solvents that are required to prepare a catalyst and used for polymerisation were prepared by refining products obtained from Aldrich Inc. using a conventional method. To prepare ethylene, an ultra pure ethylene produced by Applied Gas Technology Inc. was filtered to remove moisture and oxygen using a moisture and oxygen filtering device, and then the filtered product was polymerised. Catalyst synthesis, impregnation, and polymerisation were performed without contact with air and moisture.

The structure of the catalyst was identified using a 300 MHz NMR (produced from Bruker Inc.)

The apparent density was measured using an Apparent Density Tester 1132 produced by APT Institute fr Prftechnik, based on DIN 53466 and ISO R 60.

A molecular weight and a molecular weight distribution of obtained polymers with catalyst were determined through gel permeation chromatography (GPC) using a 150 CV+ manufactured by Waters Inc. The analysis temperature was 140 °C and a solvent used was trichlorobenzene. The GPC was standardized using polystyrene in order to obtain a number average molecular weight (Mₙ) and a weight average molecular weight (M_{w}) A polydispersity index (PDI) was obtained by dividing M_{w} by Mₙ.

A melt index (MI) of the polymer was measured using an ASTM D-1238 (conditions: E, F, 190 °C). When the MI was measured in a condition of E (under a pressure of 2.16 Kg), the measured value was denoted by I₂ ; when MI was measured in a condition of F (under a pressure of 21.6 Kg), the measured value was denoted by I₂₁ ; and when MI was measured under a pressure of 5 Kg, the measured value was denoted by I₅.

The density of the polymer was measured using an ASTM D-1505-68.

A full notch creep test (FNCT) was performed under a pressure of 7.0 Mpa at 80 °C.

To form a pipe, the sample was granulated using a W&P Twin Screw Extruder at an extrusion temperature of about 230 °C and then the granulated sample was formed into a pipe using a 50 Φ Single Screw Extruder produced by Germany Battenfeld Inc. The produced pipe had an external diameter of 32 mm and a thickness of 2 mm, and its pressure resistance was measured using a pipe pressure resistance-testing device.

A pressure resistance of the pipe was tested based on KS M 3416 at 95 °C under a pressure of 3.6 Mpa.

The sample was prepared based on ASTM D638. Tensile strength and elongation of the prepare sample were tested using a UTM at a tensile speed of 50 mm/min.

### Manufacture Example 1

### (Manufacturing of first metallocene compound - Synthesis of [Me₃SiO-(CH₂)₆-C₅H₄]₂ ZrCl₂)

50 ml of pyridine was added to 9,74 g of 1,6-hexanediol and 15.7 g of p-toluenesulfonyl chloride contained in a flask and left to sit in a refrigerator for a day. 500 ml of 2N HCl was added to the flask and then extraction was performed using 100 ml of diethylether. Moisture dissolved in ether was removed over an anhydrous MgSO₄, the moisture-free result was filtered, and the filtrate was distilled under reduced pressure to remove the ether. The result was silicagel column chromatographed using a diethylether solvent to produce 9.00 g of a product in which only one hydroxyl group was tosylated (Yield: 40 %.)

100 ml of an anhydrous THF was added to 8.12 g of the resultant product, and then 45 ml of 2N sodium cyclopentadiene(NaCp) was added thereto in a low temperature iced container and left to sit for 3 hours. Then, 200 ml of water was added to the result and extraction was performed using 100 ml of hexane. The extract was silicagel column chromatographed using a mixture of hexane and diethylether in a volume mixture ratio of 1:1 to produce 4.07 g of (6-hydroxy)- hexylcyclopentadiene (Yield: 82 %).

17.9 mmol of (6-hydroxy)- hexylcyclopentadiene was dissolved in 25 ml of THF, and then 2.7 ml of chlorotrimethylsilane and 3.00 ml of triethylamine were sequentially added thereto. The entire volatile material was removed from the resulting solution in a vacuum condition and then hexane was added thereto and filtering was performed. The filtrate was distilled at 78 °C under a reduced pressure of 0.2 torr to remove the used hexane and produce a first metallocene compound, that is, 3.37 g of a cyclopentadiene compound that is a trimethylsilyl group having a protected hydroxyl group (Yield: 79 %) The structure of the first metallocene compound was determined using ¹H NMR.

1H NMR (300 MHz, CDCl₃): 6.5 - 5.9 (m, 3 H), 3.55 (t, 2 H), 2.92 (s, 1 H), 2.85 (s, 1 H), 2.33 (quentet, 2 H), 1.6 1.2 (m, 8 H), 0.09 (s, 9 H)

11.4 mmol of the first metallocene compound was dissolved in 20 ml of THF and then 1.22 g of solid lithium diisopropylamide was added thereto at -78 °C without contact with air. The temperature was slowly increased to room temperature and then the resulting mixture was mixed for 2 hours. All of the volatile material was removed using a vacuum pump and then 20 ml of THF was added thereto. 2.15 g of ZrCl (THF)₂ was added to the resulting solution and then mixed at 60 °C for 40 hours. All of the volatile material was removed using a vacuum pump and extraction was performed using a mixed solution of toluene and hexane. 2.0 ml of chlorotrimethylsilane was added to the extract, and the resultant product was left to sit at room temperature for one hour, and then placed in a refrigerator to produce a white solid (Yield 70 %)

1H NMR (300 MHz, CDCl₃): 6.34 (s, 2 H), 6.25 (s, 2 H), 3.62 (t, 2 H), 2.68 (t, 2 H), 1.6 - 1.2 (m, 8 H), 0.17 (s, 9 H)

### Manufacture Example 2

### (Manufacturing first metallocene compound- Synthesis of [^{t}Bu-O-(CH₂)₆-C₅H₄]₂ ZrCl₂)

t-Butyl-O-(CH₂)₆-Cl was prepared using 6-chlorohexanol and using a method disclosed in Tetrahedron Lett. 2951 (1988). The prepared t-Butyl-O-(CH₂)₆-Cl was reacted with NaCp in the same manner as in Manufacture Example 1 to produce t-Butyl-O-(CH₂)₆-C₅H₅ (Yield: 60 %, b.p. 80 °C / 0.1 mmHg). Zr was attached in the same manner as in Manufacture Example 1 to produce a first supported metallocene compound (Yield: 92 %)

¹H NMR (300 MHz, CDCl₃): 6.28 (t, J = 2.6 Hz, 2 H), 6.19 (t, J = 2.6 Hz, 2 H), 3.31 (t, 6.6 Hz, 2 H), 2.62 (t, J = 8 Hz), 1.7 - 1.3 (m, 8 H), 1.17 (s, 9 H); ¹³C NMR (CDCl₃): 135.09, 116.66, 112.28, 72.42, 61.52, 30.66, 30.61, 30.14, 29.18, 27.58, 26.00.

### Manufacture Example 3

### (Manufacture of second metallocene compound - Synthesis of ^{t}Bu-O-(CH₂)₆)(CH₃ )Si(C₅H)₄(9-C₁₃H₉)ZrCl₂)

^{t}Bu-O-(CH₂)₆Cl was reacted with Mg(0) in an diethylether (Et₂O) solvent to prepare a Grignard reagent, that is, 0.14 mol of a ^{t}Bu-O-(CH₂)₆MgCl solution. At -100 °C, 24.7 mol (0.21 mol) of MeSiCl₃ was added to the Grignard reagent and then mixed for 3 hours or more. Then, the reaction mixture was filtered and vacuum dried to produce ^{t}Bu-O-(CH₂)₆SiMeCl₂ (Yield: 84 %.)

A mixture solution containing 4.82 g (0.028 mol) of fluorenyllithium and 150 ml of hexane was slowly added to 7.7 g (0.028 mol) of ^{t}Bu-O-(CH₂)₆SiMeCl₂ dissolved in 50 ml of hexane at -78 °C for 2 hours. A white precipitate (LiCl) was filtered, a desired product was extracted using hexane, and then all of the volatile material was removed through vacuum drying. As a result, a light yellow oil (^{t}Bu-O-(CH₂)₆)SiMe(9-C₁₃H₁₀ was prepared (Yield: 99 %.)

50 ml of THF was added to the (^{t}Bu-O-(CH₂)6)SiMe(9-C₁₃H₁₀) and then the (^{t}Bu-O-(CH₂)₆)SiMe(9-C ₁₃H₁₀) in THF was reacted with a mixed solution of 2.0 g (0.028 mol) of C H Li and 50 mol of THF for 3 hours or more. Then, all of the volatile material was vacuum dried and then extraction was performed using hexane to produce an orange oil (^{t}Bu-O-(CH₂)₆)(CH)Si(C H₅)(9-C₁₃H₁₀) as a final ligand (Yield: 95 %) The structure of the ligand was detected using ¹H NMR.

¹H NMR(400MHz, CDCl₃): 1.17, 1.15(t-BuO, 9H, s), -0.15, -0.36(MeSi, 3H, s), 0.35, 0.27(CH₂, 2H, m), 0.60, 0.70(CH₂, 2H, m), 1.40, 1.26(CH₂, 4H, m), 1.16, 1.12(CH₂, 2H, m), 3.26(tBuOCH₂, 2H, t, 3JH-H=7Hz), 2.68(methyleneCpH, 2H, brs), 6.60, 6.52, 6.10(CpH, 3H, brs), 4.10, 4.00(FluH, 1H, s), 7.86(FluH, 2H, m), 7.78(FluH, 1H, m), 7.53(FluH, 1H, m), 7.43-7.22(FluH, 4H, m)

2 eq. of n-BuLi was added to a mixed solution containing 12 g (0.028 mol) of (^{t}Bu-O-(CH₂)₆)(CH₃)Si(C₅H₅)(9-C₁₃H₁₀ and 100 mol of THF at -78 °C and the result was allowed to react for 4 hours or more while the temperature was increased to room temperature. As a result, an orange solid, (^{t}Bu-O-(CH₂)₆)(CH₃)Si(C₅H₅Li)(9-C₁₃H₁₀Li) (Yield: 81 %), was prepared.

A mixed solution containing 2.0 g (4.5 mol) of dilithium salt and 30 ml of ether was slowly added to a suspension solution of 1.05 g (4.50 mmol) of ZrCl₄ and 30 ml of ether at -78 °C, and the result was allowed to react at roan temperature for 3 hours. All of the volatile material was vacuum dried and the resulting oil-like liquid material was filtered using a dichloromethane solvent. The filtrate was vacuum dried and then hexane was added thereto to produce a precipitate. The obtained precipitate was cleaned several times using hexane to produce a red solid, racemic-(^{t}Bu-O-(CH₂)₆)(CH₃) Si(C₅H₄)9-C₁₃H₉)ZrCl₂ (Yield: 54 %)

¹H NMR (400MHz, CDCl₃): 1.19(t-BuO, 9H, s), 1.13(MeSi, 3H, s), 1.79(CH₂, 4H, m), 1.60(CH₂, 4H, m), 1.48(CH₂, 2H, m), 3.35(tBuOCH₂, 2H, t, 3JH-H=7Hz), 6.61(CpH, 2H, t, 3JH-H=3Hz), 5.76(CpH, 2H, d, 3JH-H=3Hz), 8.13 (FluH, 1H, m), 7.83 (FluH, 1H, m), 7.78(FluH, 1H, m), 7.65(FluH, 1H, m), 7.54(FluH, 1H, m), 7.30(FluH, 2H, m), 7.06(FluH, 1H, m)

¹³C NMR (400MHz, CDCl₃): 27.5(Me3CO, q, 1JGH=124Hz), -3.3(MeSi, q, 1JGH=121Hz), 64.6, 66.7, 72.4, 103.3, 127.6, 128.4, 129.0 (7C, s), 61.4(Me COCH₂, t, 1JC-H=135Hz), 14.5(ipsoSiCH₂, t, 1JC-H=122Hz), 33.1, 30.4, 25.9, 22.7(4C, t, 1JC-H=119Hz), 110.7, 111.4, 125.0, 125.1, 128.8, 128.1, 126.5, 125.9, 125.3, 125.1, 125.0, 123.8 (FluC and CpC, 12C, d, 1JC-H=171Hz, 3JC-H=10Hz)

### Manufacture Example 4

### (Manufacturing of second metallocene compound - Synthesis of (CH₃)₂Si(^{t}Bu-O-(CH₂)₆-(C₅H₄)(9-C₁₃H₉)ZrCl₂)

Fluorenyllithium was reacted with Me ₂SiCl₂ in hexane to prepare Me₂SiCl(9-C₁₃H₁₀ ) 0.016 mol of ^{t}Bu-O-(CH₂)₆-C₅H₅Li prepared by reacting ^{t}Bu-O-(CH₂)₆-C₅H₅ with n-BuLi was added to Me₂ SiCl(9-C₁₃H₁₀) dissolved in 50 ml of THF at -78 °C, and then the reaction temperature was slowly increased to room temperature. The mixture was allowed to react at room temperature for 3 hours or more and then all of the volatile material was vacuun dried. Hexane was added to the resulting oil-like liquid and then the hexane solution was vacuum dried to produce a light yellow oil ((CH₃)₂Si(^{t}Bu-O-(CH₂)₆-(C₅H₅)(9-C₁₃H₁₀)) ligand (Yield: 99 %) The structure of the ligand was determined using ¹H NMR.

¹H NMR (400MHz, C₆D₆): 1.09(t-BuO, 9H, s), -0.13, -0.32, -0.61(Me₂ Si, 6H, s), 1.25(CH₂, 2H, m), 1.24(CH₂, 2H, m), 1.41(CH₂, 4H, m), 2.25(Cp-CH₂, 2H, m), 3.23(tBuOCH₂, 2H, d of t, 3JH-H=7Hz), 6.35, 6.05, 5.70(CpH, 5H, m, m, brs), 3.05(methyleneCpH, 2H, brs), 4.20, 4.00, 3.85(FluH, 1H, s), 7.80(FluH, 2H, m), 7.45(FluH, 2H, m), 7.29-7.20(FluH, 4H, m)

A dilithium salt was reacted with ZrCl₄ in the same manner as in Manufacture Example 3 to produce an orange solid, racemic-(CH₃)₂Si(^{t}Bu-O-(CH₂)₆-(C₅H₄)(9-C₁₃H ₉)ZrCl₂ (Yield: 25 %)

¹H NMR (400MHz, CDCl₃): 1.16(t-BuO, 9H, s), 1.11(Me₂Si, 3H, s), 1.13(Me₂Si, 3H, s), 1.43(CH₂, 4H, m), 1.25(CH₂, 4H, m), 2.45(Cp-CH₂, 2H, m), 3.26(tBuOCH₂, 2H, t, 3JH-H=7Hz), 5.41(CpH, 1H, t, 3JH-H=3Hz), 5.70 (CpH, 1H, t, 3JH-H=3Hz), 6.28(CpH, 1H, t, 3JH-H=3Hz), 8.13(FluH, 2H, m), 7.67-7.49(FluH, 4H, m), 7.29(FluH, 2H, m)

¹³ C NMR (400MHz, CDCl₃): 27.5(Me₃CO, q, 1JGH=125Hz), -3.3(Me₂ Si, q, 1JC-H=121Hz), 27.6, 66.3, 72.4, 102.6, 113.8, 128.8, 129.1, 141.9(9C, s), 61.5(Me₃ COCH₂, t, 1JC-H=141Hz), 30.5, 30.2, 30.0, 29.2, 25.9(5C, t, 1JC-H=124Hz), 111.6, 112.0, 119.7, 123.8, 123.9, 125.0, 126.3, 126.5, 128.0, 128.1, 128.7(FluC and CpC, 11C d, 1JC-H=161Hz, 3JC-H=10Hz)

### Manufacture Example 5

### (Manufacturing of second metallocene compound - Synthesis of (^{t}Bu-O-(CH₂)₆) (CH₃)C(C₅H₄) (9-C₁₃H₉)ZrCl₂)

12. 5 ml (0.15 mol) of pyrrolidine was added to a mixture of 13.5 g (0.067 mol) of 8-butoxy-2-octanone and 9.0 g (0.14 mol) of cyclopentadiene monomer in 200 ml of an anhydrous methanol solvent at room temperature, and then a reaction was performed for 12 hours. A mixed solution containing 12 g (0.2 mol) of acetic acid and 200 ml of water was added to the reaction solution, and then mixed for one hour. A generated organic layer was extracted using 300 ml of an ether solvent. The obtained liquid was distilled under reduced pressure (100 °C, 500 mtorr) to produce a light yellow oil, 6-methyl-6-t-butoxyhexylfulvene (Yield: 40 %)

A mixed solution containing 4.48 g (0.026 mol) of fluorenyllithium and 100 ml of THF was slowly added to 6.5 g (0.026 mol) of 6-methyl-6-t-butoxyhexylfulvene dissolved in 50 ml of THF at -78 °C, and then mixed at room temperature for 12 hours. A saturated a NH₄ Cl/water solution and an ether solvent were added to the reaction product to extract the resulting organic layer, which was chromatographed to produce a yellow oil (^{t}Bu-O-(CH₂)₆)(CH₃)C(C₅H₅X9-C₁₃H₁₀) ligand (Yield: 97 %)

¹HNMR (400MHz, CDCl₃): 1.19(t-BuO, 9H, s), 0.58, 0.89(MeC, 3H, s), 1.90(CH₂ , 2H, m), 1.49(CH₂, 2H, m), 1.30(CH₂, 4H, m), 1.27(CH₂, 2H, m), 3.31(tBuOCH₂, 2H, t,3JH-H=7Hz), 6.88, 6.62, 5.87(CpH, 3H, brs), 3.07(methylenenCpH, 2H, brs), 4.15(FluH, 1H, s), 7.72(FluH, 1H, m), 7.67(FluH, 1H, m), 7.55(FluH, 1H, m), 7.36(FluH, 1H, m), 7.28(FluH, 1H, m), 7.24(FluH, 1H, m), 7.04(FluH, 1H, m), 6.76(FluH, 1H, m)

2 eq. of n-BuLi(1.6 M in hexane) was added to a solution of (^{t}Bu-O-(CH₂)₆)(CH₃ )C(C₅H₅X9-C₁₃H₁₀) (3.2 g, 0.008 mol)/THF (50 ml) at -78 °C and then mixed at room temperature for 5 hours to produce a red solid (^{t}Bu-O-(CH₂)₆)CH₃)C(C₅H₄Li)(9-C₁₃H₉ Li) (Yield: 88 %)

A solution of a dilithium salt (2.5 g, 4.4 mmol)/hexane (50 ml) was slowly added to a suspension solution of ZrCl₄ (1.02 g, 4.5 mmol)/hexane (50 ml) at -78 °C and then mixed at room temperature for 12 hours. All of the volatile material was vacuum dried and then 100 ml of toluene solvent was used to extract a desired product. The extract was cleaned several times using hexane to obtain a red solid, racemic-(^{t}Bu-O-(CH₂)₆ )(CH₃)C(C₄H₄)(9-C₁₃H₉)ZrCl₂ (Yield 31%).

¹H NMR (400MHz, CDCl₃): 1.18(t-BuO, 9H, s), 2.39(MeC, 3H,s), 1.82(CH₂, 2H, m), 1.59(CH₂, 4H, m), 1.46(CH₂, 2H, m), 1.22(CH₂, 2H, m), 3.34(tBuOCH₂, 2H, t, 3JH-H=7Hz), 6.33(CpH, 2H, t, 3JH-H=2Hz), 5.80-5.75(CpH, 2H, m), 7.27(FluH, 2H, m), 7.56(FluH, 2H, m), 7.63(FluH, 1H, d, 3JH-H=9Hz), 7.82(FluH, 1H, d, 3JH-H=9Hz), 8.14(FluH, 2H, m)

¹³ C NMR (400MHz, CDCl₃): 27.5(Me₃CO, q, 1JC-H=124Hz), -3.3(MeSi, q, 1JC-H=121Hz), 64.6, 66.7, 72.4, 103.3, 127.6, 128.4, 129.0 (7C, s), 61.4(Me ₃COCH₂, t, 1JC-H=135Hz), 1.4.5(ipsoSiCH2, t, 1,JC-H=122Hz), 33.1, 30.4, 25.9, 22.7(4C, t, 1JC-H=119Hz), 110.7, 111.4, 125.0, 125.1, 128.8, 128.1, 126.5, 125.9, 125.3, 125.1, 125.0, 123.8(FluC and CpC, 12C, d, 1JC-H=171Hz, 3JH-H=10Hz)

### Manufacture Example 6

### (Manufacturing of second metallocene compound - synthesis of (CH₃)₂C(^{t}Bu-O-(CH₂)₆-(C₅H₄) (9-C ₁₃H₉)ZrCl₂)

6,6-dimethyl-3-(6-t-butoxyhexyl)fulvene was prepared using t-butoxyhexylcyclopentadiene and an anhydrous acetone in the same manner as in Manufacture Example 5 (Yield: 59 %) Then, the 6,6-dimethyl-3-(6-t-butoxyhexyl)fulvene was reacted with fluorenyllithium to produce a yellow oil, (H₃)₂C(^{t}Bu-O-(CH₂)₆-(C₅H₅)(9-C₁₃H₁₀) ligand (Yield: 70 %.)

¹H NMR (400MHz, CDCl₃): 1.19, 1.20(t-BuO, 9H, s), 1.06, 1.05, 1.02(Me₂C, 6H, s), 1.27(CH₂, 2H, m), 1.41(CH₂, 2H, m), 1.58(CH₂, 4H, m), 2.50, 2.46, 2.36(Cp-CH₂, 2H, t, 3JH-H=7Hz ), 3.36(tBuOCH₂, 2H, d oft, 3JH-H=7Hz), 6.53, 6.10, 6.00, 5.97, 5.69(CpH, 5H, brs), 3.07(methyleneCpH, 2H, brs), 4.14, 4.11, 4.10(FluH, 1H, s), 7.70(FluH, 2H, m), 7.33(FluH, 2H, m), 7.23-7.10(FluH, 4H, m)

A dilithium salt was reacted with ZrCl₄ in the same manner as in Manufacture Example 5 to produce an orange solid, racemic-(CH₃)₂C(^{t}Bu-O-(CH₂)₆-(C₅H₄)(9-C₁₃H₉) ZrCl₂ (Yield: 63 %)

¹H NMR (400MHz, CDCl₃): 1.16(t-BuO, 9H, s), 2.35(Me₂C, 3H, s), 2.40(Me₂C, 3H, s) 1.46(CH₂, 4H, m), 1.27(CH₂, 4H, m), 1.20(CH₂, 2H, m), 2.52(Cp-CH₂, 2H, m), 3.27(tBuOCH₂, 2H, t, 3JH-H=7Hz), 5.43(CpH, 1H, t, 3JH-H=3Hz), 5.67(CpH, 1H, t, 3JH-H=3Hz), 6.01(CpH, 1H, t, 3JH-H=3Hz), 8.15(FluH, 2H, m), 7.80(FluH, 2H, m), 7.54(FluH, 2H, m), 7.26(FluH, 2H, m)

¹³C NMR (400MHz, CDCl₃): 27.5(Me₃CO, q, 1JC-H=124Hz), 15.3(Me C, q, 1JC-H=124Hz), 40.4(Me ₃C, s), 25.9(Me₂C, s), 68.1, 72.4, 78.8, 113.8, 122.6, 136.4, 142.0(7C, s), 61.5(Me₃COCH₂, t, 1JC-H=140Hz), 65.8(CpCH₂, t, 1JC-H=138Hz), 30.5, 29.7, 29.2, 27.6(4C, t, 1JC-H=124Hz), 103.0, 103.1, 117.2, 128.9, 128.2, 125.3, 124.9, 124.8, 123.4, 123.2, 123.1 (FluC and CpC, 11C d, 1JC-H=171Hz, 3JC-H=10Hz)

### Examples 1 through 3-Manufacturing of mixed supported metallocene catalyst

### Example 1

### (Drying of support)

Silica (XPO 2412, produced from Grace Davison Inc.) was dried in a vacuum at 800 °C for 15 hours.

### (Manufacturing of first supported metallocene catalyst)

500 g of the silica was loaded into a high-pressure reactor including a 10 liter mechanical mixer, and 8 liters of MAO containing 12 mmol of aluminum in toluene was added thereto. The silica and the MAO were mixed at 40 °C for one hour to facilitate a reaction, and then a sufficient amount of toluene was used to clean the reactant product to remove an unreacted aluminium compound. The result was dried under reduced pressure at 50 °C.

7 liters of toluene was added to the dried result. Then, a toluene solution in which 50 g of the first metallocene compound prepared according to Manufacture Example 2 was dissolved was added to the reactor and stirred at 40 °C for one hour to facilitate a reaction. When the reaction was complected, the stirring was stopped and the toluene layer was separated for removal. The reaction product was cleaned several times using 5 liters of a toluene solution and then subjected to reduced pressure to remove the toluene. As a result, a solid powder was obtained.

### (Manufacturing of second supported metallocene catalyst)

500 g of the silica was loaded into a 10 liter Buchi reactor, and 8 liters of MAO containing 12 mmol of aluminum in toluene was added thereto. The silica and the MAO were mixed at 40 °C for one hour to facilitate a reaction, and then a sufficient amount of toluene was used to clean the reaction product to remove an unreacted aliminum compound. The result was dried under reduced pressure at 50 °C.

7 liters of toluene was added to the dried result. Then, a toluene solution in which 80 mmol of the second metallocene compound prepared according to Manufacture Example 5 was dissolved was added to the reactor by 500 ml (what does by 500 ml mean?) and stirred at 40 °C for one hour to facilitate a reaction. When the reaction was completed, the stirring was stopped and the toluene layer was separated for removal. The reaction product was cleaned several times using 5 liters of a toluene solution and then subjected to reduced pressure to remove the toluene. As a result, a solid powder was obtained.

### (Manufacturing of mixed supported metallocene catalyst)

In order to prepare a mixed supported metallocene catalyst, 200 mg of the first supported metallocene catalyst prepared as described above was transferred to a sampling bottle and 800 mg of a second supported metallocene catalyst prepared as described above was transferred to a sampling bottle. 200 ml of a normal hexane was further added to the glass reactor cell and then stirred at 40 °C to mix the normal hexane with the first and second supported metallocene catalysts. Then, the reaction product was vacuum dried to produce a solid catalyst.

### Example 2

A mixed supported metallocene catalyst was prepared in the same manner as in Example 1, except that 300 mg of the first supported metallocene catalyst and 700 mg of the second supported metallocene catalyst were used.

### Example 3

A mixed supported metallocene catalyst was prepared in the same manner as in Example 1, except that 500 mg of the first supported metallocene catalyst and 500 mg of the second supported metallocene catalyst were used.

### Examples 4 through 21- Manufacturing of polyethylene through batch polymerization

### Example 4

50 mg of the mixed supported metallocene catalyst prepared according to Example 1 were measured in a dry box and then loaded into a 50 ml glass bottle. Then, the glass bottle was sealed using a rubber diaphragm and then removed from the dry box, thus preparing a catalyst to be injected. Polymerization was performed in a 2 liter Buchi reactor including a mechanical mixer, which could be used at high pressure and at varying temperature.

1 liter of a normal hexane containing 0.6 ml of 1.0 M triethylaluminum, and 5 ml of 1-hexene as a comonomer were loaded into the Buchi reactor. Then, the above-prepared mixed supported metallocene catalyst was loaded into the reactor without contact with air. Polymerization was performed for one hour while continuously providing a gaseous ethylene mononer under a pressure of 0,88 MPa (9 Kgf/cm²) at 80 °C. The polymerization was terminated by, first, stopping stirring and then discharging ethylene.

The polymerization solvent of the resulting polymer was filtered for removal, and then dried in a vacuum oven at 80 °C for 4 hours.

### Example 5

Polyethylene was manufactured in the same manner as in Example 4, except that 10 ml of 1-hexene was used

### Example 6

Polyethylene was manufactured in the same manner as in Example 4, except that 20 ml of 1-hexene was used

### Example 7

Polyethylene was manufactured in the same manner as in Example 4, except that 50 mg of the mixed supported metallocene catalyst prepared according to Example 2 was used.

### Example 8

Polyethylene was manufactured in the same manner as in Example 4, except that 50 mg of the mixed supported metallocene catalyst prepared according to Example 2 and 10 ml of 1-hexene were used.

### Example 9

Polyethylene was manufactured in the same manner as in Example 4, except that 50 mg of the mixed supported metallocene catalyst prepared according to Example 2 and 20 ml of 1-hexene were used.

### Example 10

Polyethylene was manufactured in the same manner as in Example 4, except that 50 mg of the mixed supported metallocene catalyst prepared according to Example 3 was used.

### Example 11

Polyethylene was manufactured in the same manner as in Example 4, except that 50 mg of the mixed supported metallocene catalyst prepared according to Example 3 and 10 ml of 1-hexene were used.

### Example 12

Polyethylene was manufactured in the same manner as in Example 4, except that 50 mg of the mixed supported metallocene catalyst prepared according to Example 3 and 20 ml of 1-hexene were used.

### Example 13

Polyethylene was manufactured in the same manner as in Example 4, except that 10 mg of the first supported metallocene catalyst and 40 mg of the second supported metallocene catalyst prepared according to Example 1 were loaded into different 50 ml glass bottles and then sequentially injected into the polymerization reactor.

### Example 14

Polyethylene was manufactured in the same manner as in Example 13, except that 10 ml of 1-hexene was used.

### Example 15

Polyethylene was manufactured in the same manner as in Example 13, except that 20 ml of 1-hexene was used.

### Example 16

Polyethylene was manufactured in the same manner as in Example 4, except that 15 mg of the first supported metallocene catalyst and 35 mg of the second supported metallocene catalyst prepared according to Example 1 were loaded into different 50 ml glass bottles and then sequentially loaded into the polymerization reactor.

### Example 17

Polyethylene was manufactured in the same manner as in Example 16, except that 10 ml of 1-hexene was used.

### Example 18

Polyethylene was manufactured in the same manner as in Example 16, except that 20 ml of 1-hexene was used.

### Example 19

Polyethylene was manufactured in the same manner as in Example 4, except that 25 mg of the first supported metallocene catalyst and 25 mg of the second supported metallocene catalyst prepared according to Example 1 were loaded into different 50 ml glass bottles and then sequentially injected into the polymerization reactor.

### Example 20

Polyethylene was manufactured in the same manner as in Example 19, except that 10 ml of 1-hexene was used.

### Example 21

Polyethylene was manufactured in the same manner as in Example 19, except that 20 ml of 1-hexene was used.

### Comparative Example 1

Polyethylene was manufactured in the same manner as in Example 4, except that 50 mg of the first supported metallocene catalyst prepared according to Example 1 was used.

### Comparative Example 2

Polyethylene was manufactured in the same manner as in Example 4, except that 50 mg of the second supported metallocene catalyst prepared according to Example 1 was used.

Co-polymerization activities of ethylene and 1-hexene with respect to various catalysts prepared according to the Examples described above, and melt indexes, apparent densities, molecular weights, molecular weight distributions, and densities of obtained polymers are shown in Table 1 below.

**Table 1**

| | 1-hexene (ml) | Amount of Polymer (g)* | Apparent Density (g/cm³) | Density (g/ cm³) | I₂(g/10 min) | I₂₁/I₅ | Mw (x10³) | PDI | FNCT (hour,0 °C 7 Mpa) |
|---|---|---|---|---|---|---|---|---|---|
| Example 4 | 5 | 170 | 0.40 | 0.947 | 0.12 | 10.9 | 758 | 9.8 | 330 |
| Example 5 | 10 | 179 | 0.44 | 0.940 | 0.24 | 9.8 | 665 | 10.8 | 470 |
| Example 6 | 20 | 155 | 0.40 | 0.922 | 0.10 | 12.3 | 768 | 9.9 | 571 |
| Example 7 | 5 | 175 | 0.41 | 0.947 | 0.35 | 12.3 | 639 | 10.3 | 360 |
| Example 8 | 10 | 178 | 0.42 | 0.940 | 0.33 | 11.6 | 635 | 10.8 | 494 |
| Example 9 | 20 | 160 | 0.41 | 0.920 | 0.20 | 12.8 | 710 | 10.9 | 530 |
| Example 10 | 5 | 168 | 0.42 | 0.949 | 0.40 | 15.9 | 680 | 14.1 | 301 |
| Example 11 | 10 | 172 | 0.43 | 0.937 | 0.44 | 16.8 | 662 | 15.7 | 445 |
| Example 12 | 20 | 165 | 0.38 | 0.924 | 0.28 | 15.5 | 657 | 14.3 | 475 |
| Example 13 | 5 | 160 | 0.42 | 0.948 | 0.20 | 10.3 | 723 | 10.6 | 320 |
| Example 14 | 10 | 172 | 0.41 | 0.940 | 0.28 | 11.3 | 667 | 10.3 | 489 |
| Example 15 | 20 | 160 | 0.38 | 0.921 | 0.43 | 12.3 | 612 | 10.6 | 560 |
| Example 16 | 5 | 155 | 0.40 | 0.947 | 0.20 | 11.2 | 688 | 12.1 | 369 |
| Example 17 | 10 | 159 | 0.40 | 0.941 | 0.33 | 11.9 | 642 | 12.6 | 480 |
| Example 18 | 20 | 148 | 0.38 | 0.922 | 0.40 | 13.2 | 650 | 13.1 | 485 |
| Example 19 | 5 | 148 | 0.39 | 0.947 | 0.35 | 12.9 | 639 | 14.3 | 312 |
| Example 20 | 10 | 150 | 0.38 | 0.942 | 0.39 | 13.1 | 610 | 14.1 | 456 |
| Example 21 | 20 | 139 | 0.39 | 0.926 | 0.43 | 14.9 | 601 | 14.6 | 548 |
| Comparative Example 1 | 5 | 150 | 0.37 | 0.952 | 1.40 | 7.0 | 168 | 3.1 | 83 |
| Comparative Example 2 | 5 | 178 | 0.38 | 0.948 | 0.05 | 7.8 | 854 | 3.6 | 126 |

| | | | | | | | | | |
|---|---|---|---|---|---|---|---|---|---|
| * Amount of polymer produced (g): Amount of polymer produced using 50 mg of catalyst. | | | | | | | | | |

When ethylene polymerization was performed using the mixed supported metallocene catalyst according to Examples 1-3, a fouling phenomenon in which polymer particles accumulate on the wall of the reactor or are tangled up with each other did not occur, and the produced polymer had an excellent apparent density of 0.37 to 0.44 g/cm³. In addition, the weight average molecular weight (M_{w}) was controlled in a range of 160,000 to 850,000, and a wide molecular weight distribution of 3.1-14.3 could be obtained. The produced polymer had an excellent shape, and the density of the polymer was in the range of 0.952 to 0.920 g/cm³ according to the ratio of 1-hexene to the mixed catalyst.

FNCT values shown in Table 1 are proportional to pressure resistance when the polyolefin polymer is processed into a pipe. High FNCT values with respect to similar densities indicate that 1-hexane comonomer mainly exists in a high molecular weight part of the obtained polymer inside.

As shown in Table 1, the polyolefin polymer produced using the mixed supported metallocene catalyst or sequential using the first supported metallocene catalyst and the second supported metallocene catalyst has a wide molecular weight distribution, and has various properties depending on a component ratio of the supported catalyst, and the high molecular weight component of the polyolefin polymer has a large amount of 1-hexene.

### Example 22

### (Manufacturing of pilot polymer)

500 g of the first supported metallocene catalyst and 500 g of the second supported metallocene catalyst prepared according to Example 1 were separately suspended in 50 liters of refined hexane, and each was transported to different mixing tank reactors and then to a common catalyst mixer. The supply rate of the catalyst was in the range of 1 mg/min to 5 g/min such that a weight ratio of the first supported metallocene catalyst to the second supported metallocene catalyst was 3:7. The first and second metallocene catalysts were sufficiently stirred to obtain a homogeneous solution, and the homogeneous solution was supplied to a polymerization reactor at a rate of 1 mg/min to 5 g/min. Polymerization was performed through a continuous hexane slurry polymerization process in a 200-liter continuous stirred tank reactor (CSTR) including a mechanical mixer suitable for high-pressure environments and various temperatures, and the stirring speed was 250 rpm. The resulting polymer slurry was transported from the reactor to a centrifuge and then to a drying unit. As a result, solid powder was produced. Polymerization was performed by providing ethylene at a flow rate of 10 to 15 kg/hr, and the amount of the catalyst provided was controlled such that the pressure of ethylene was in the range of 0,59 to 0,98 MPa (6 to 10 kgf/cm²) at 80 °C and the amount of the generated polymer was 15 kg per hour. The density was controlled using 1-hexene as an alpha-olefin, and the molecular weight were controlled by adding a small amount of hydrogen.

### Example 23

Pilot polymerization was performed in the same manner as in Example 22, except that the supply rate of the first and second supported metallocene catalysts was in the range of 1 mg/min to 5 g/min such that the weight ratio of the first supported metallocene compound to the second supported metallocene compound was 5:5 in a catalyst mixer.

### Example 24

Pilot polymerization was performed in the same manner as in Example 22, except that 500 g of the first supported metallocene catalyst and 500 g of the second supported metallocene catalyst prepared according to Example 1 were separately suspended in 50 liters of refined hexane, separately transported to different mixing tank reactors and then transported to a common polymerization reactor while agitator rotated at a speed of 200 rpm, and the supply rate of the first and second supported metallocene catalysts was in the range of 1 mg/min to 5 g/min such that the weight ratio of the first supported metallocene compound to the second supported metallocene compound was 3:7 in a catalyst mixer.

### Comparative Example 3

Pilot polymerization was performed in the same manner as in Example 22, except that 500 g of the first supported metallocene catalyst prepared according to Example 1 was loaded into a sealed container in a nitrogen atmosphere, suspended in 50 liters of refined hexane, and then loaded into a mixing tank reactor and to a polymerization reactor while the agitator rotated at a speed of 200 rpm, and the supply rate was in the range of 1 mg/min to 5 g/min.

### Comparative Example 4

Pilot polymerization was performed in the same manner as in Example 22, except that 500 g of the second supported metallocene catalyst prepared according to Example 1 was loaded into a sealed container in a nitrogen atmosphere, suspended in 50 liters of refined hexane, and then loaded into a mixing tank reactor and to a polymerization reactor while the agitator rotated at a speed of 200 rpm, and the supply rate was in the range of 1 mg/min to 5 g/min.

Table 2 shows activities, apparent densities, densities, molecular weights, molecular weight distributions, and basic properties of respective polymers.

**Table 2**

| | Comparative Example 3 | Comparative Example 4 | Example 22 | Example 23 | Example 24 |
|---|---|---|---|---|---|
| Catalyst | First supported metallocene catalyst | Second supported metallocene catalyst | Mixed supported metallocene catalyst | Mixed supported metallocene catalyst | First and second supported metallocene catalysts which are separately added |
| Comonomer | 1-hexene | 1-hexene | 1-hexene | 1-hexene | 1-hexene |
| Apparent Density (g/cm³) | 0.37 | 0.38 | 0.40 | 0.39 | 0.40 |
| Density (g/cm³) | 0.9603 | 0.9320 | 0.9290 | 0.9332 | 0.9341 |
| MI(2.16kg) | 438 | 0.25 | 0.35 | 0.33 | 0.31 |
| MI(21.6kg) | - | 5.32 | 28.6 | 27.6 | 27.5 |
| MI(21.6kg)/ MI(2.16kg) | - | 21.3 | 81.7 | 83.6 | 88.7 |
| Molecular weight distribution | Mono-modal distribution | Mono-modal distribution | Bi-modal distribution | Bi-modal distribution | Bi-modal distribution |
| Mw/Mn | | 3.8 | 9.4 | 12.5 | 12.3 |
| Tensile Strength(kg/c m²) | - | 272 | 298 | 263 | 287 |
| Elongation (%) | - | 830 | 970 | 863 | 984 |
| FNCT(hour,8 0 °C 7 Mpa) | - | 57 | 298 | 360 | 342 |
| Pipe pressure resistance (hour,95 °C, 3.6 Mpa) | - | 92 | >1,000 | >1,000 | >1,000 |

Table 2 shows polymerization properties of two kinds of supported metallocene catalysts and a mixed supported metallocene catalyst used to produce polyolefin polymers with different molecular weights.

The catalyst did not cause op- erational interruption that might occur due to fouling in a continuous reaction system, and the polymer exhibited an excellent apparent density of 0.3 to 0.5 g/cm³.

In a polyolefin polymerization process, a polyolefin polymer having a wide molecular weight distribution can be produced using the mixed supported metallocene catalyst in a single reactor. This process is very simple and does not require a two-step reactor. In addition, a comonomer mainly exists in a high molecular weight component of the polymer so that the polymer has excellent ESCR properties and pressure resistance.

In Example 24, the catalyst mixer was not used and the first and second supported metallocene catalysts were directly loaded into a single reactor. At this time, amounts of these catalysts could be controlled to obtain a polymer having desired properties. That is, by changing only the supply ratio of the first supported metallocene catalyst to the second supported metallocene catalyst, products having various grades could be produced.

Meanwhile, the polymer prepared according to Comparative Example 3 [250] could not be formed into a pipe due to its low molecular weight, and thus, data for its properties could not be obtained.

## Claims

1. A method of preparing a mixed supported metallocene catalyst, the method comprising: reacting an additive catalyst having a Group 13 metal compound with a support having a hydroxy group on a surface thereof to produce a supported additive catalyst; impregnating the supported additive catalyst with a metallocene compound of formula 1 to produce a first supported metallocene catalyst; impregnating the supported additive catalyst with a metallocene compound of formula 2 or formula 3 to produce a second supported metallocene catalyst; and blending the first supported metallocene catalyst and the second supported metallocene catalyst:
(CₚR¹ₐR^{m}_{b})(C_{p'}R²_{a'}Rⁿ_{b'})_{z}MQₖ (1) 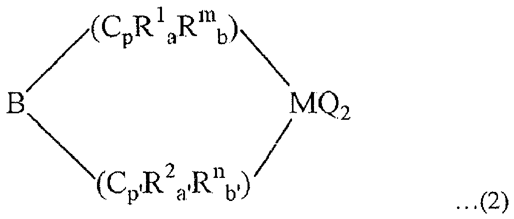 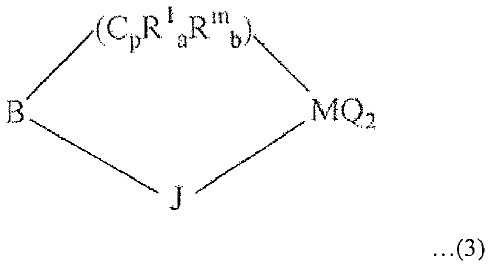
where Cₚ and C_{p'} are each independently a group selected from the group consisting of a cyclopentadienyl group, an indenyl group, a 4,5,6,7-tetrahydro-1-indenyl group, and a fluorenyl group;
R^{m} and Rⁿ are each independently a hydrogen radical, a C1-C20 alkyl group, a C5-C12 cycloalkyl group, a C6-C18 aryl group, a C2-C14 alkenyl group, a C6-C18 alkylaryl group, a C6-C18 arylalkyl group, a C6-C20 arylalkenyl group, or a C1-C20 alkylsilyl group;
R¹ and R² are each independently hydrogen or a C1 to C6 hydrocarbyl group;
a, a', b, and b' are each an integer of 1 through 4;
M is a transition metal selected from the group consisting of a Group 4B transition metal, a Group 5B transition metal, and a Group 6B transition metal;
Q is a halogen group, a C1-C20 alkyl group, a C2-C16 alkenyl group, a C6-C20 aryl group, a C6-C20 alkylaryl group, a C6-C20 arylalkyl group, or a C6-C20 alkylidene group,
k is 2 or 3;
z is 0 or 1, wherein, when k is 3, z is 0;
B is a material selected from the group consisting of a C1-C4 alkyl group and a C1-C10 hydrocarbonyl group having one of silicon, germanium, phosphorous, nitrogen, boron, and aluminum;
J is a material selected from the group consisting of NR^{s}, O, PR^{s}, and S, where R^{s} is one of a C1-C20 alkyl group and a substituted alkyl group;
at least one hydrogen radical of R^{m}, Rⁿ, B, or R^{s} is a compound represented by formula 4, a compound represented by formula 5, or a compound represented by formula 6: 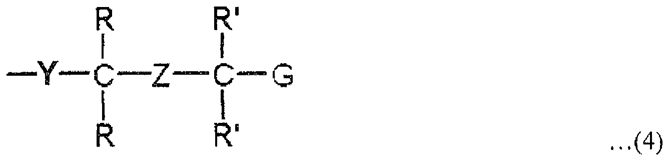
where Y is a chemical bond or an oxygen atom;
Z is an oxygen atom or a sulfuric atom;
R and R' are each independently a hydrogen radical, a C1-C20 alkyl group, a cycloalkyl group, a C₆-C₂₀ aryl group, a C2-C12 alkenyl group, a C6-C20 alkylaryl group, a C6-C20 arylalkyl group, or a C6-C20 arylalkenyl group, wherein one of the R's can be connected to the other R' to form a ring;
G is a C1-C20 alkoxy group, a C6-C20 aryloxy group, a C1-C20 alkylthio group, a C6-C20 arylthio group, a phenyl group, or a substituted phenyl group and can be connected to R'to form a ring;
when Z is a sulfuric atom, G is one of a C1-C20 alkoxy group and a C6-C20 aryloxy group, and when G is a C1-C20 alkylthio group, a C6-C20 arylthio group, a phenyl group, or a substituted phenyl group, Z is an oxygen atom; 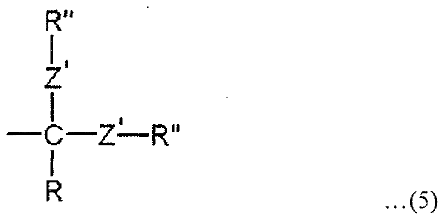
where Z' is one of an oxygen atom and a sulfuric atom and at least one of the two Z's is an oxygen atom; and
R and R" are each independently a hydrogen radical, a C1-C20 alkyl group, a C5-C20 cycloalkyl group, a C6-C20 aryl group, a C2-C12 alkenyl group, a C6-C20 alkylaryl group, a C6-C20 arylalkyl group, or a C6-C20 arylalkenyl group, wherein one of the R"s is connected to the R or the other R" to form a ring; and 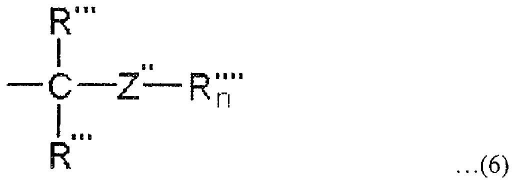
where Z" is an oxygen atom, a sulfur atom, a nitrogen atom, a phosphorous atom, or an arsenic atom;
R"'s are each independently a hydrogen radical, a C1-C40 alkyl group, a C5-C40 cycloalkyl group, a C6-C20 aryl group, a C2-C12 alkenyl group, a C6-C20 alkylaryl group, a C6-C20 arylalkyl group, or a C6-C20 arylalkenyl group;
R"" is a hydrogen radical, a C1-C40 alkyl group, a C6-C20 aryl group, a C2-C20 alkenyl group, a C6-C20 alkylaryl group, a C1-C20 alkylsilyl group, a C6-C20 arylsilyl group, a phenyl group, or a C6-C20 substituted phenyl group; and
n is 1 or 2, wherein when Z" is an oxygen atom or a sulfuric atom, n is 1, and, when Z" is a nitrogen atom, a phosphorous atom, or an arsenic atom, n is 2.

2. The method of claim 1, wherein the support is silica, silica- alumina, or silica- magnesia.

3. The method of claim 1, wherein the additive catalyst is methylaluminoxane (MAO), ethylaluminoxane, isobutylaluminoxane, or butylaluminoxane.

## Patentansprüche

1. Verfahren zur Herstellung eines gemischten geträgerten Metallocenkatalysators, das Verfahren umfassend: Reagieren eines Additivkatalysators, der eine Metallverbindung der Gruppe 13 hat, mit einem Träger, der eine Hydroxylgruppe auf einer seiner Oberflächen hat, um einen geträgerten Additivkatalysator herzustellen; Imprägnieren des geträgerten Additivkatalysators mit einer Metallocenverbindung der Formel 1, um einen ersten geträgerten Metallocenkatalysator herzustellen; Imprägnieren des geträgerten Additivkatalysators mit einer Metallocenverbindung der Formel 2 oder Formel 3, um einen zweiten geträgerten Metallocenkatalysator herzustellen; und Vermengen des ersten geträgerten Metallocenkatalysators und des zweiten geträgerten Metallocenkatalysators:
(CₚR¹ₐR^{m}_{b})(C_{p'}R²_{a'}Rⁿ_{b'})_{z}MQₖ (1) 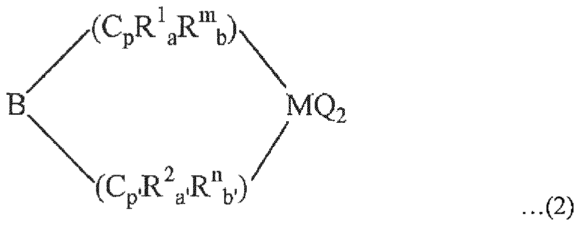 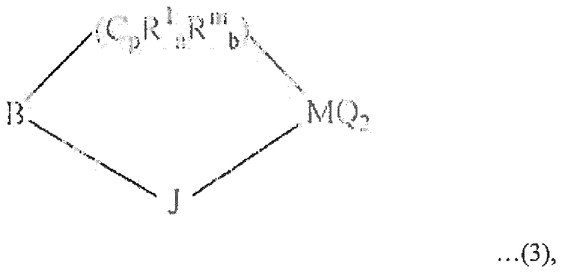
wobei Cₚ und C_{p'} jeweils unabhängig voneinander eine Gruppe sind, ausgewählt aus der Gruppe, bestehend aus einer Cyclopentadienylgruppe, einer Indenylgruppe, einer 4,5,6,7-Tetrahydro-1-indenylgruppe und einer Fluorenylgruppe;
R^{m} und Rⁿ jeweils unabhängig voneinander ein Wasserstoffrest, eine C1-C20-Alkylgruppe, eine C5-C12-Cycloalkylgruppe, eine C6-C18-Arylgruppe, eine C2-C14-Alkenylgruppe, eine C6-C18-Alkylarylgruppe, eine C6-C18-Arylalkylgruppe, eine C6-C20-Arylalkenylgruppe oder eine C1-C20-Alkylsilylgruppe sind;
R¹ und R² jeweils unabhängig voneinander Wasserstoff oder eine C1- bis C6-Hydrocarbylgruppe sind;
a, a', b und b' jeweils eine ganze Zahl von 1 bis 4 sind;
M ein Übergangsmetall ist, ausgewählt aus der Gruppe bestehend aus einem Übergangsmetall der Gruppe 4B, einem Übergangsmetall der Gruppe 5B und einem Übergangsmetall der Gruppe 6B;
Q eine Halogengruppe, eine C1-C20-Alkylgruppe, eine C2-C16-Alkenylgruppe, eine C6-C20-Arylgruppe, eine C6-C20-Alkylarylgruppe, eine C6-C20-Arylalkylgruppe oder eine C6-C20-Alkylidengruppe ist,
k gleich 2 oder 3 ist;
z gleich 0 oder 1 ist, wobei, wenn k gleich 3 ist, z gleich 0 ist;
B ein Material ist, ausgewählt aus der Gruppe bestehend aus einer C1-C4-Alkylgruppe und einer C1-C10-Hydrocarbonylgruppe, die eines von Silizium, Germanium, Phosphor, Stickstoff, Bor und Aluminium hat;
J ein Material ist, ausgewählt aus der Gruppe bestehend aus NR^{s}, O, PR^{s} und S, wobei R^{s} ausgewählt ist aus einer C1-C20-Alkylgruppe und einer substituierten Alkylgruppe;
zumindest ein Wasserstoffrest von R^{m}, Rⁿ, B oder R^{s} ist eine Verbindung, dargestellt durch Formel 4, eine Verbindung, dargestellt durch Formel 5, oder eine Verbindung, dargestellt durch Formel 6: 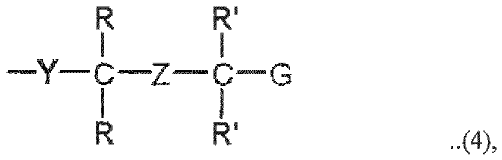
wobei Y eine chemische Bindung oder ein Sauerstoffatom ist;
Z ein Sauerstoffatom oder ein Schwefelatom ist;
R und R' jeweils unabhängig ein Wasserstoffrest, eine C1-C20-Alkylgruppe, eine Cycloalkylgruppe, eine C6-C20-Arylgruppe, eine C2-C12-Alkenylgruppe, eine C6-C20-Alkylarylgruppe, eine C6-C20-Arylalkylgruppe oder eine C6-C20-Arylalkenylgruppe ist, wobei eines der R's mit dem anderen R' verbunden sein kann, um einen Ring zu bilden;
G eine C1-C20-Alkoxygruppe, eine C6-C20-Aryloxygruppe, eine C1-C20-Alkylthiogruppe, eine C6-C20-Arylthiogruppe, eine Phenylgruppe oder eine substituierte Phenylgruppe ist und mit R' verbunden sein kann, um einen Ring zu bilden;
wenn Z ein Schwefelatom ist, G ausgewählt ist aus einer C1-C20-Alkoxygruppe und einer C6-C20-Aryloxygruppe, und wenn G eine C1-C20-Alkylthiogruppe, eine C6-C20-Arylthiogruppe, eine Phenylgruppe oder eine substituierte Phenylgruppe ist, Z ein Sauerstoffatom ist; 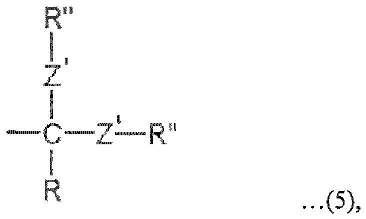
wobei Z' ausgewählt ist aus einem Sauerstoffatom und einem Schwefelatom und zumindest eines der beiden Z's ein Sauerstoffatom ist; und
R und R" jeweils unabhängig ein Wasserstoffrest, eine C1-C20-Alkylgruppe, eine C5-C20-Cycloalkylgruppe, eine C6-C20-Arylgruppe, eine C2-C12-Alkenylgruppe, eine C6-C20-Alkylarylgruppe, eine C6-C20-Arylalkylgruppe oder eine C6-C20-Arylalkenylgruppe sind, wobei eines der R"s mit dem R oder dem anderen R" verbunden ist, um einen Ring zu bilden; und 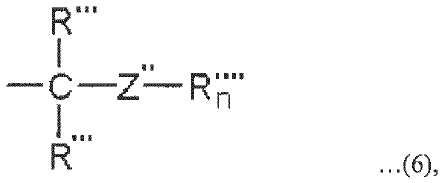
wobei Z" ein Sauerstoffatom, ein Schwefelatom, ein Stickstoffatom, ein Phosphoratom oder ein Arsenatom ist;
R"'s jeweils unabhängig voneinander ein Wasserstoffrest, eine C1-C40-Alkylgruppe, eine C5-C40-Cycloalkylgruppe, eine C6-C20-Arylgruppe, eine C2-C12-Alkenylgruppe, eine C6-C20-Alkylarylgruppe, eine C6-C20-Arylalkylgruppe oder eine C6-C20-Arylalkenylgruppe sind;
R"" ein Wasserstoffrest, eine C1-C40-Alkylgruppe, eine C6-C20-Arylgruppe, eine C2-C20-Alkenylgruppe, eine C6-C20-Alkylarylgruppe, eine C1-C20-Alkylsilylgruppe, eine C6-C20-Arylsilylgruppe, eine Phenylgruppe oder eine substituierte C6-C20-Phenylgruppe ist; und
n gleich 1 oder 2 ist, wobei, wenn Z" ein Sauerstoffatom oder ein Schwefelatom ist, n gleich 1 ist und, wenn Z" ein Stickstoffatom, ein Phosphoratom oder ein Arsenatom ist, n gleich 2 ist.

2. Verfahren nach Anspruch 1, wobei der Träger Siliziumdioxid, Siliziumdioxid-Aluminiumoxid oder Siliziumdioxid-Magnesiumoxid ist.

3. Verfahren nach Anspruch 1, wobei der Additivkatalysator Methylaluminoxan (MAO), Ethylaluminoxan, Isobutylaluminoxan oder Butylaluminoxan ist.

## Revendications

1. Procédé de préparation d'un catalyseur métallocène mixte sur support, le procédé comprenant les étapes consistant à : faire réagir un additif de catalyse comportant un composé de métal du Groupe 13 avec un support présentant un groupe hydroxy sur sa surface afin de produire un additif de catalyse sur support ; imprégner l'additif de catalyse sur support avec un composé métallocène de la formule 1 afin de produire un premier catalyseur métallocène sur support ; imprégner l'additif de catalyse avec un composé métallocène de la formule 2 ou de la formule 3 afin de produire un deuxième catalyseur métallocène sur support ; et mélanger le premier catalyseur métallocène sur support et le deuxième catalyseur métallocène sur support ;
**(CₚR¹ₐR^{m}_{b}XCₚR²_{a'}Rⁿ_{b'})_{z}MQₖ** **(1)** 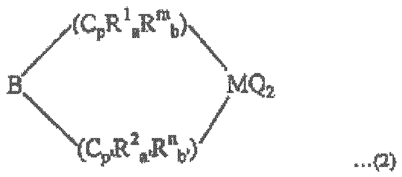 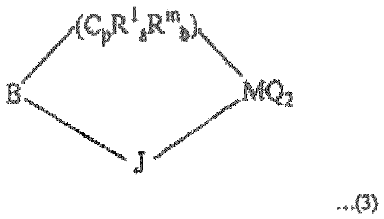
où Cₚ et C_{p'} représentent chacun indépendamment un groupe sélectionné parmi le groupe constitué d'un groupe cyclopentadiényle, d'un groupe indényle, d'un groupe 4,5,6,7-tétrahydro-1-indényle et d'un groupe fluorényle ;
R^{m} et Rⁿ représentent chacun indépendamment un radical hydrogène, un groupe alkyle en C1 à C20, un groupe cycloalkyle en C5 à C12, un groupe aryle en C6 à C18, un groupe alkényle en C2 à C14, un groupe alkylaryle en C6 à C18, un groupe arylalkyle en C6 à C18, un groupe arylalkényle en C6 à C20 ou un groupe alkylsilyle en C1 à C20.
R¹ et R² représentent chacun indépendamment l'hydrogène ou un groupe hydrocarbyle en C1 à C6 ;
a, a', b et b' représentent chacun un nombre entier pouvant aller de 1 à 4 ; M représente un métal de transition sélectionné parmi le groupe constitué d'un métal de transition du Groupe 4B, d'un métal de transition du Groupe 5B et d'un métal de transition du Groupe 6B :
Q représente un groupe halogène, un groupe alkyle en C1 à C20, un groupe alkényle en C2 à C16, un groupe aryle en C6 à C20, un groupe alkylaryle en C6 à C20, un groupe arylalkyle en C6 à C20 ou un groupe alkylidène en C6 à C20.
k vaut 2 ou 3 ;
z vaut 0 ou 1, et quand k vaut 3, z vaut 0 ;
B représente un matériau de transition sélectionné parmi le groupe constitué d'un groupe alkyle en C1 à C4 et d'un groupe hydrocarbonyle en C1 à C10 présentant l'un de silicium, germanium, phosphore, azote, bore et aluminium ;
J représente un matériau sélectionné parmi le groupe constitué de NR^{s}, O, PR^{s} et S, où R^{s} représente l'un d'un groupe alkyle en C1 à C20 et d'un groupe alkyle substitué ;
au moins un radical hydrogène de R^{m}, Rⁿ, B ou R^{s} est un composé représenté par la formule 4, un composé représenté par la formule 5 ou un composé représenté par la formule 6 : 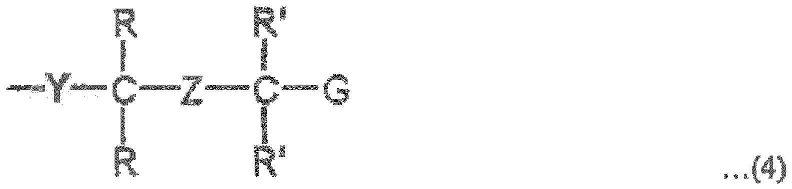
dans laquelle formule Y représente une liaison chimique ou un atome d'oxygène ;
Z représente un atome d'oxygène ou un atome sulfurique ;
R et R' représentent chacun indépendamment un radical hydrogène, un groupe alkyle en C1 à C20, un groupe cycloalkyle, un groupe aryle en C6 à C20, un groupe alkényle en C2 à C 12, un groupe alkylaryle en C6 à C20, un groupe arylalkyle en C6 à C20, un groupe arylalkényle en C6 à C20, dans lesquels l'un des R' peut être relié à l'autre R' pour former un cycle ;
G représente un groupe alcoxy en C1 à C20, un groupe aryloxy en C6 à C20, un groupe alkylthio en C1 à C20, un groupe arylthio en C6 à C20, un groupe phényle, ou un groupe phényle substitué et il peut être relié à R' pour former un cycle ;
lorsque Z représente un atome sulfurique, G représente l'un d'un groupe alcoxy en C1 à C20 et d'un groupe aryloxy en C6 à C20, et lorsque G représente un groupe alkylthio en C1 à C20, un groupe arythio en C6 à C20, un groupe phényle ou un groupe phényle substitué, Z représente un atome d'oxygène ; 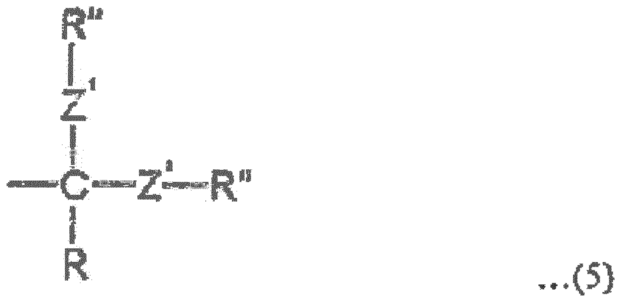
où Z' représente l'un d'un atome d'oxygène et d'un atome de souffre et au moins l'un des deux Z représente un atome d'oxygène ; et
R et R" représentent chacun indépendamment un radical hydrogène, un groupe alkyle en C1 à C20, un groupe cycloalkyle en C5 à C20, un groupe aryle en C6 à C20, un groupe alkényle en C2 à C12, un groupe alkylaryle en C6 à C20, un groupe arylalkyle en C6 à C20, un groupe arylalkényle en C6 à C20, l'un des R" étant relié au R ou aux autres R" pour former un cycle ; et 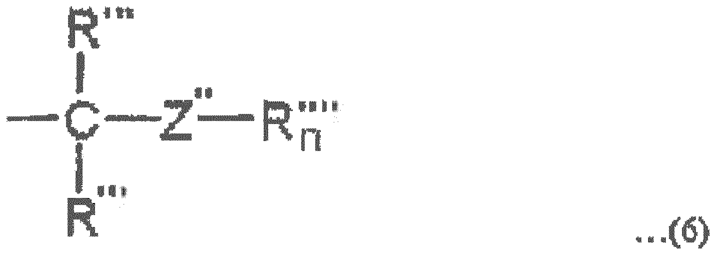
où Z" représente un atome d'oxygène, un atome de souffre, un atome d'azote, un atome de phosphore ou un atome d'arsenic ;
Les R'" représentent chacun indépendamment un radical d'hydrogène, un groupe alkyle en C1 à C40, un groupe cycloalkyle en C5 à C40, un groupe aryle en C6 à C20, un groupe alkényle en C2 à C12, un groupe alkylaryle en C6 à C20, un groupe arylalkyle en C6 à C20 ou un groupe arylalkényle en C6 à C20 ;
R"" représente un radical hydrogène, un groupe alkyle en C1 à C40, un groupe aryle en C6 à C20, un groupe alkényle en C2 à C20, un groupe alkylaryle en C6 à C20, un groupe alkylsilyle en C1 à C20, un groupe arylsilyle en C6 à C20, un groupe phényle ou un groupe phényle en C6 à C20 substitué ; et
n vaut 1 ou 2, où Z" représente un atome d'oxygène ou un atome de souffre, n vaut 1, et lorsque Z" représente un atome d'azote, un atome de phosphore ou un atome d'arsenic, n vaut 2.

2. Procédé selon la revendication 1, dans lequel le support est en silice, en silice-alumine ou en silice magnésie.

3. Procédé selon la revendication 1, dans lequel l'additif de catalyse est un méthylaluminoxane (MAO), un éthylaluminoxane, un isobutylaminoxane ou un butylaminoxane.
